# EUROPEAN PATENT APPLICATION

(11) **EP 4 648 265 A1**
(43) Date of publication of application: **12.11.2025**
(21) Application number: 24815435.3
(22) Date of filing: 27.05.2024
(51) Int. Cl.: H02K 9/19, B60K 11/02, H02K 9/02, H02M 7/48

(54) **DRIVE DEVICE FOR VEHICLE**

(30) Priority: 31.05.2023 JP 2023089950
(71) Applicant: AISIN CORPORATION, Kariya-shi, Aichi 448-8650 (JP)
(72) Inventor: MAEDA, Takuyo, Kariya-shi, Aichi 448-8650 (JP); KATSUDA, Takuya, Kariya-shi, Aichi 448-8650 (JP); KOSHIDA, Takafumi, Kariya-shi, Aichi 448-8650 (JP); MURAKAMI, Satoshi, Kariya-shi, Aichi 448-8650 (JP); OKISHIMA, Tatsuya, Kariya-shi, Aichi 448-8650 (JP); TEZUKA, Takeshi, Kariya-shi, Aichi 448-8650 (JP)
(74) Representative: Kramer Barske Schmidtchen Patentanwälte PartG mbB
(86) International application number: PCT/JP2024/019357
(87) International publication number: WO 2024/247952

(57) **Abstract**

In a first accommodation chamber (E1), a cooling fluid path forming member (38) is disposed so as to be in contact with at least one of an inverter module (INV) and a power supply module (PWR), a first cooling fluid path (301) through which a cooling fluid flows is formed inside the cooling fluid path forming member (38), a second cooling fluid path (302) through which a cooling fluid flows is formed inside a wall of a case (9), and the first cooling fluid path (301) and the second cooling fluid path (302) are connected inside the first accommodation chamber (E1).

## Description

### TECHNICAL FIELD

The present invention relates to a vehicle drive device.

### BACKGROUND ART

JP 2019-170077 A discloses a vehicle drive device (1) including a rotary electric machine (rotor (20), stator (30)) serving as a driving force source of wheels (803, 804), a drive control device (131) that controls driving of the rotary electric machine, a charger (136) that charges an on-vehicle battery (805) connected to the rotary electric machine via the drive control device (131) with electric power supplied from an external power supply (900), and a case (10) that accommodates the rotary electric machine, the drive control device (131), and the charger (136) (reference signs in parentheses in the background art are those of the reference literature). In the case (10), a first accommodation chamber in which the rotary electric machine is accommodated is formed on a lower side in an up-down direction (Z) in an on-vehicle posture in which the vehicle drive device (1) is mounted on the vehicle, and a second accommodation chamber in which the drive control device (131) and the charger (136) are accommodated is formed on an upper side. The first accommodation chamber is formed inside a cylindrical peripheral wall portion (10b) of the case (10). The second accommodation chamber is formed as a rectangular box-shaped space inside a rectangular tube portion (10e) in a rectangular tubular shape adjacent to an upper side of the peripheral wall portion (10b) in the up-down direction (Z) on a radially outer side of the peripheral wall portion (10b). The rectangular tube portion (10e) includes a wall portion, a bottom portion (lower bottom portion), and an upper bottom portion, and the bottom portion is in contact with a cylindrical peripheral wall portion (10b). A cooling flow path through which a cooling fluid flows is formed along one wall portion of the rectangular tube portion (10e), the bottom portion, and the peripheral wall portion (10b), and a cooling unit (60) is formed by the cooling flow path.

An inflow port (16) through which the cooling fluid flows into the cooling flow path and an outflow port (17) through which the cooling fluid flows out are disposed on the one wall portion of the rectangular tube portion (10e). The cooling flow path is formed so as to linearly extend from the inflow port (16) to the bottom of the rectangular tube portion (10e) along the wall of the rectangular tube portion (10e), further linearly extend along the bottom, then extend so as to circulate along the peripheral wall portion (10b), turn back immediately before reaching the rectangular tube portion (10e), extend along the peripheral wall portion (10b), the bottom, and the wall portion, and reach the outflow port (17). In the flow path of the cooling fluid, heat is exchanged with the drive control device (131) on the side close to the inflow port (16), that is, on the upstream side of the flow path of the cooling fluid, heat is exchanged with the rotary electric machine in the midstream region, and heat is exchanged with the charger (136) on the side close to the outflow port (17), that is, on the downstream side of the flow path of the cooling fluid. The drive control device (131) that generates heat when driving the rotary electric machine is efficiently cooled by the cold cooling fluid on the upstream side. Since the on-vehicle battery (805) is charged by the external power supply (900) while the vehicle stops, the temperature of the cooling fluid is less likely to rise due to heat exchange with the drive control device (131) and the rotary electric machine. Therefore, the charger (136) is appropriately cooled even when this is disposed on the downstream side of the flow path of the cooling fluid.

### CITATIONS LIST

### PATENT LITERATURE

Patent Literature 1: JP 2019-170077 A

### SUMMARY OF INVENTION

### TECHNICAL PROBLEMS

The vehicle drive device disclosed in the above literature includes a cooling structure capable of efficiently cooling a plurality of cooling targets. However, since the cooling flow path is formed so as to turn around the case substantially twice, the route of the cooling flow path becomes long, and the pressure loss when the cooling fluid is supplied to the cooling flow path tends to increase. Since a space occupied by the cooling flow path in the vehicle drive device also increases, there is room for improvement in terms of space efficiency.

In view of the above background, it is desired to provide a vehicle drive device capable of appropriately cooling a cooling target by reducing an installation space and a pressure loss to appropriately form a flow path of a cooling fluid.

### SOLUTIONS TO PROBLEMS

A vehicle drive device in consideration of above includes a rotary electric machine, an output member drivingly connected to a wheel, a power transmission mechanism that transmits a driving force between the rotary electric machine and the output member, an inverter module that controls driving of the rotary electric machine, a power supply module including at least one of a voltage conversion circuit electrically connected to an on-vehicle battery, the voltage conversion circuit that performs voltage conversion of the on-vehicle battery, a charging circuit for charging the on-vehicle battery from an external power supply, and a feeding circuit for feeding power from the on-vehicle battery to an outside, and a case including a first accommodation chamber that accommodates the inverter module and the power supply module, and a second accommodation chamber that accommodates the rotary electric machine and the power transmission mechanism, in which a cooling fluid path forming member is disposed in the first accommodation chamber so as to be in contact with at least one of the inverter module and the power supply module, a first cooling fluid path through which a cooling fluid flows is formed inside the cooling fluid path forming member, a second cooling fluid path through which the cooling fluid flows is formed inside a wall of the case, and the first cooling fluid path and the second cooling fluid path are connected inside the first accommodation chamber.

According to this configuration, the first cooling fluid path, which is a cooling fluid path inside the cooling fluid path forming member, and the second cooling fluid path, which is a cooling fluid path inside the wall of the case, are connected inside the first accommodation chamber. Therefore, the route of the cooling fluid path can be easily formed short, and the pressure loss in the cooling fluid path can be easily reduced. It is easy to facilitate the connecting work of the first cooling fluid path and the second cooling fluid path. That is, according to this configuration, it is possible to appropriately cool the cooling target by reducing an installation space and the pressure loss to appropriately form the flow path of the cooling fluid.

Further features and advantages of the vehicle drive device will become clear from the following description of exemplary and non-limiting embodiments described with reference to the drawings.

### BRIEF DESCRIPTION OF DRAWINGS

FIG. 1 is an exploded perspective view of a vehicle drive device.
FIG. 2 is a skeleton diagram of a drive unit.
FIG. 3 is a schematic control block diagram of the vehicle drive device.
FIG. 4 is a diagram schematically illustrating a refrigerant circuit and a cooling water circuit.
FIG. 5 is a perspective view schematically illustrating an example of a circuit module.
FIG. 6 is an exploded perspective view of a specific example of the vehicle drive device.
FIG. 7 is an external perspective view of a specific example of the vehicle drive device.
FIG. 8 is a schematic cross-sectional view of a first accommodation chamber and a second accommodation chamber with a partition wall interposed therebetween.
FIG. 9 is a perspective view schematically illustrating an example of a connection form of a cooling water module, an oil cooler, and a partition wall.
FIG. 10 is a schematic cross-sectional view of a first accommodation chamber and a second accommodation chamber with a partition wall interposed therebetween in another configuration of the vehicle drive device.
FIG. 11 is a schematic cross-sectional view of the first accommodation chamber in a top view in another configuration of the vehicle drive device.

### DESCRIPTION OF EMBODIMENTS

Hereinafter, an embodiment of a vehicle drive device will be described with reference to the drawings. A vehicle drive device 100 of the present embodiment appropriately forms a thermal management system in a vehicle with the vehicle drive device 100 as a core while suppressing an increase in size. For example, in small vehicles such as A-segment vehicles in Europe or the like, and light vehicles in Japan, it is required to improve mounting efficiency by reducing the size and weight of on-vehicle components including the vehicle drive device 100 as much as possible. For example, it is also preferable to shorten the length of connection components such as wiring and piping by disposing the on-vehicle components close to each other, or to reduce the wiring and piping by integrating different devices.

Heat of cooling water for cooling a device that generates heat in a vehicle such as a driving force source of a wheel is discharged by a radiator, and in general, the radiator is disposed on a frontmost side of the vehicle in order to discharge heat by traveling wind. Small vehicles such as A-segment vehicles are front-wheel-drive vehicles, in many cases, in order to secure a space in the vehicle on which an occupant rides, and the driving force source of a wheel is also disposed on a front side of the vehicle. In a vehicle equipped with an on-vehicle air conditioner that performs cooling, heating or the like, the on-vehicle air conditioner, many portions of a flow path through which a refrigerant used in the on-vehicle air conditioner flows, and functional components that perform heat exchange are also disposed on a front side of the vehicle. In particular, regarding heating, in a conventional vehicle in which an internal combustion engine is used as a driving force source of a wheel, it has been easy to use the internal combustion engine as a heat source; however, in a vehicle such as an electric vehicle that does not have an internal combustion engine, there is no such heat source, a heat pump system is exclusively used for heating, and mounted components tend to increase as compared with a system using waste heat of the internal combustion engine. By appropriately piping and wiring these on-vehicle components in a limited space on the front side of the vehicle, a space that can be used for a vehicle cabin or the like can be widened. In the vehicle drive device 100 of the present embodiment, the functional components that perform the thermal management using the cooling water and the refrigerant in this manner are integrally configured with the vehicle drive device 100.

Note that, the "cooling water" for cooling a cooling target by performing heat exchange with the cooling target may be another liquid such as "oil" or another gas, and they may be collectively referred to as a "cooling fluid". The "cooling fluid" including the "cooling water" is also a so-called "refrigerant". Note that, in the present specification, a fluid that transfers heat to implement both functions of cooling and heating in the on-vehicle air conditioner is referred to as the "refrigerant", and the "cooling water (cooling fluid)" and the "refrigerant will be described separately. As a matter of course, the "cooling water" and the "refrigerant" may be the same type of "fluid".

Hereinafter, a preferred embodiment of such vehicle drive device 100 will be described, and first, a function as a drive unit TA for driving a wheel W will be described.

Note that, in the present specification, an expression "drivingly connected" refers to a state in which two rotating elements are connected so as to be able to transmit a driving force, and includes a state in which the two rotating elements are connected so as to rotate integrally, or a state in which the two rotating elements are connected so as to be able to transmit a driving force via one or two or more transmission members. Examples of such transmission member include various members that transmit rotation at the same speed or at a variable speed, such as a shaft, a gear mechanism, a belt, and a chain, for example. Note that, as the transmission member, an engagement device that selectively transmits rotation and a driving force, for example, a friction engagement device, a meshing engagement device or the like may be included. However, an expression "drivingly connected" regarding a rotating element of a planetary gear mechanism refers to a state in which the rotating elements are drivingly connected without an intervention of another rotating element of the planetary gear mechanism. In the present specification, "rotate integrally" means to rotate integrally regardless of whether it is separable or inseparable. That is, a plurality of members that rotate integrally may be integrally formed of the same member, or may be formed of different members and integrated by welding, spline coupling or the like. In the present specification, regarding arrangement of two elements, "overlap as seen in a specific direction" means that, in a case where a virtual straight line parallel to a line-of-sight direction is moved in each direction orthogonal to the virtual straight line, a region in which the virtual straight line intersects both of the two elements is present at least partially.

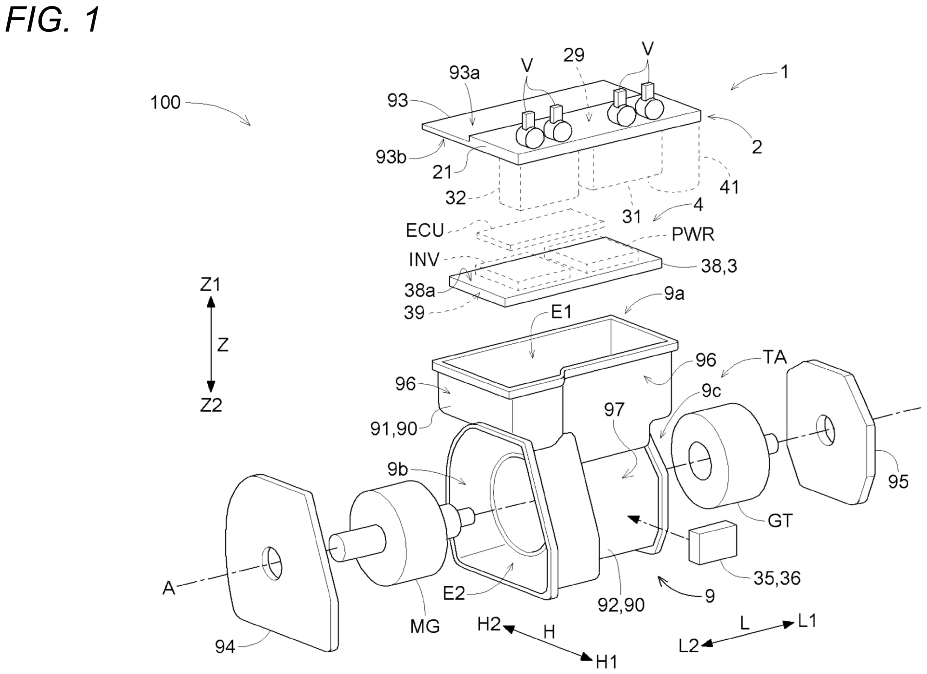

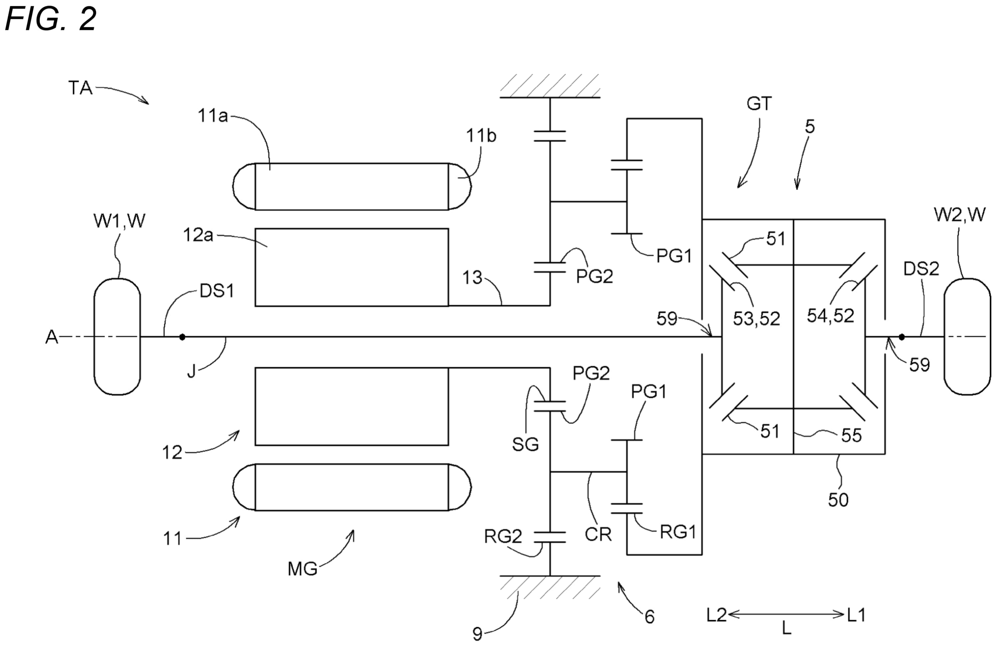

As illustrated in a schematic exploded perspective view of FIG. 1 and a skeleton diagram of FIG. 2, the vehicle drive device 100 includes a rotary electric machine MG including a rotor 12, an output member drivingly connected to the wheel W, and a power transmission mechanism GT that transmits a driving force between the rotary electric machine MG and the output member. As will be described later, a direction along a rotation axis A of the rotor 12 is defined as an axial direction L, and the power transmission mechanism GT is disposed on an axial direction first side L1, which is one side in the axial direction L with respect to the rotor 12. As will be described later in detail, the rotary electric machine MG is a driving force source of the vehicle, and the power transmission mechanism GT includes a reducer 6 and a differential gear mechanism 5. Specifically, the vehicle drive device 100 of the present embodiment includes the rotary electric machine MG including the rotor 12, a pair of output members each of which is drivingly connected to the wheel W, the reducer 6 that decelerates rotation of a rotor shaft 13, the differential gear mechanism 5 that distributes a driving force from the rotary electric machine MG transmitted to a differential input element (differential case 50) via the reducer 6 to the pair of output members, and a case 9 that forms an accommodation chamber (a second accommodation chamber E2 to be described later) that accommodates the rotary electric machine MG, the reducer 6, and the differential gear mechanism 5.

The rotary electric machine MG and the power transmission mechanism GT correspond to a "drive unit TA" in the vehicle drive device 100. At least a part of the output member may be included in the drive unit TA. The case 9 accommodates at least the drive unit TA including the rotary electric machine MG and the power transmission mechanism GT, and supports an inverter module INV, a power supply module PWR, and a refrigerant circuit module 2 to be described later. Note that, the term "support" is not limited to the case of using the outside of the case 9, and includes a mode of being supported by an inner surface of the case 9. That is, at least one or more of the inverter module INV, the power supply module PWR, and the refrigerant circuit module 2 may be accommodated in the case 9.

The pair of wheels W include a first wheel W1 and a second wheel W2, the first wheel W1 is drivingly connected to a first drive shaft DS1, and the second wheel W2 is drivingly connected to a second drive shaft DS2. In the present embodiment, a pair of side gears 52, which are output gears of the differential gear mechanism 5, include a first side gear 53 and a second side gear 54. The first side gear 53 is drivingly connected to the first drive shaft DS1 via a connection shaft J, and the second side gear 54 is drivingly connected to the second drive shaft DS2. For example, the first side gear 53 and the connection shaft J are connected by spline coupling, and the second side gear 54 and the second drive shaft DS2 are connected by spline coupling, too. These connection units are spline engagement units 59. The output members are, for example, the spline engagement units 59. The output member may be the first side gear 53, the second side gear 54, the first drive shaft DS1, the second drive shaft DS2, and the connection shaft J.

In the following description, a direction along the rotation axis A of the rotor 12 is referred to as an "axial direction L" as described above. One side in the axial direction L is referred to as an "axial direction first side L1", and the other side in the axial direction L is referred to as an "axial direction second side L2". In the present embodiment, the rotary electric machine MG, the reducer 6, and the differential gear mechanism 5 are coaxially arranged from the axial direction second side L2 toward the axial direction first side L1 in the described order. The vehicle drive device 100 of the present embodiment has a single-axis configuration, and an axis (rotation axis A) on which the rotary electric machine MG, the reducer 6, and the differential gear mechanism 5 are arranged is the rotation axis A of the vehicle drive device 100 and also is a rotation axis of the rotary electric machine MG, the reducer 6, and the differential gear mechanism 5. A direction orthogonal to the rotation axis A of the rotor 12 is referred to as a "radial direction". In the radial direction, the rotation axis A side of the rotor 12 is referred to as a "radially inner side", and the opposite side is referred to as a "radially outer side". In a vehicle mounted state in which the vehicle drive device 100 is mounted on a vehicle, a direction in a vertical direction is defined as an "up-down direction Z", an upper side is defined as an "up-down direction Z upper side Z1", and a lower side is defined as an "up-down direction Z lower side Z2". In a case where the vehicle drive device 100 is horizontally mounted on the vehicle, one direction in the radial direction coincides with the up-down direction Z. A direction orthogonal to the axial direction L and the up-down direction Z is referred to as a "front-rear direction H", one side in the front-rear direction H is referred to as a "front-rear direction first side H1", and the other side is referred to as a "front-rear direction second side H2". In the present embodiment, the front-rear direction first side H1 is a front side of the vehicle 10, and the front-rear direction second side H2 is a rear side. The axial direction L corresponds to the "width direction" of the vehicle 10.

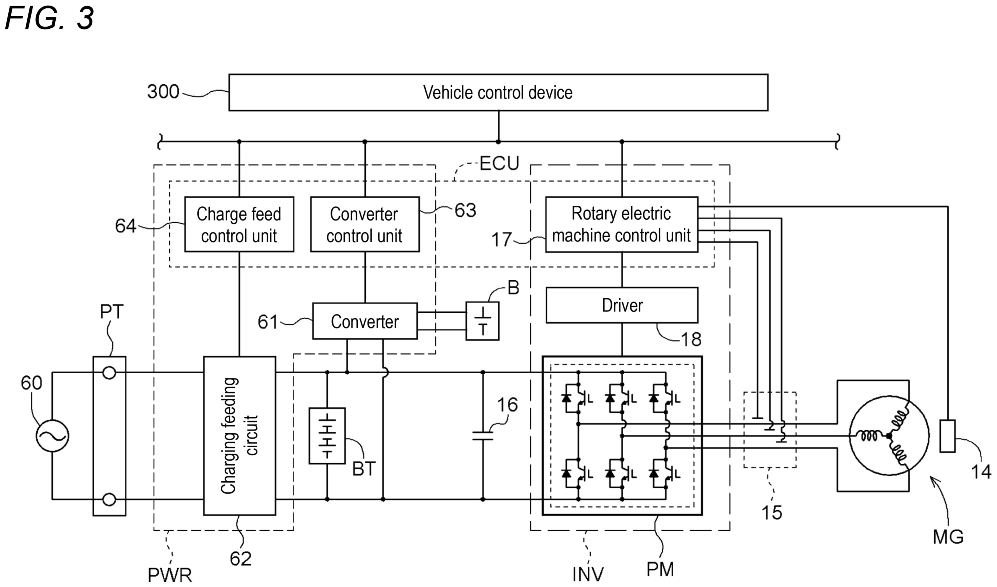

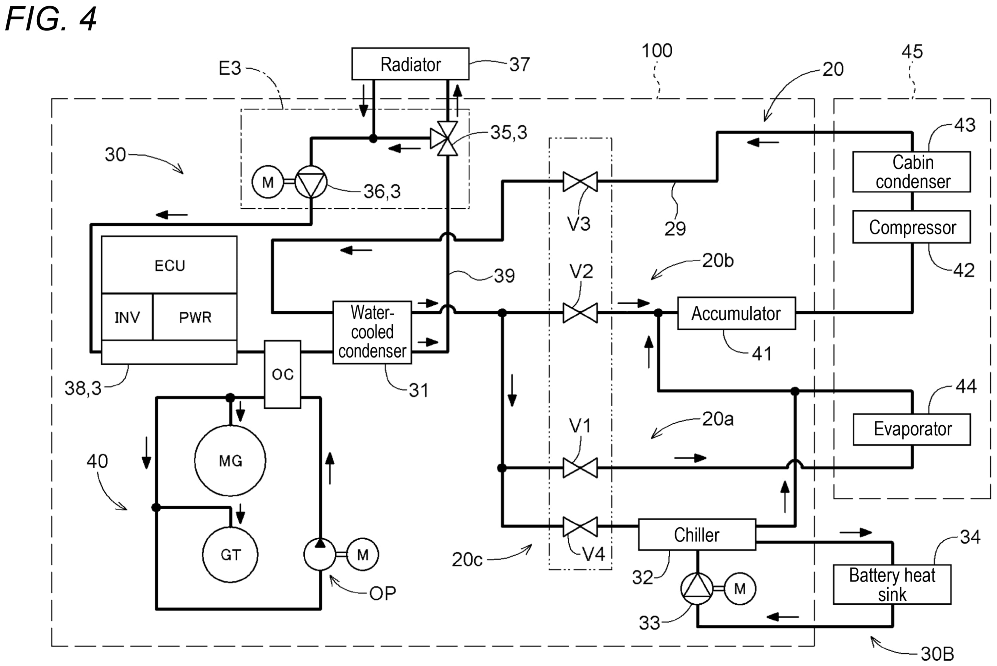

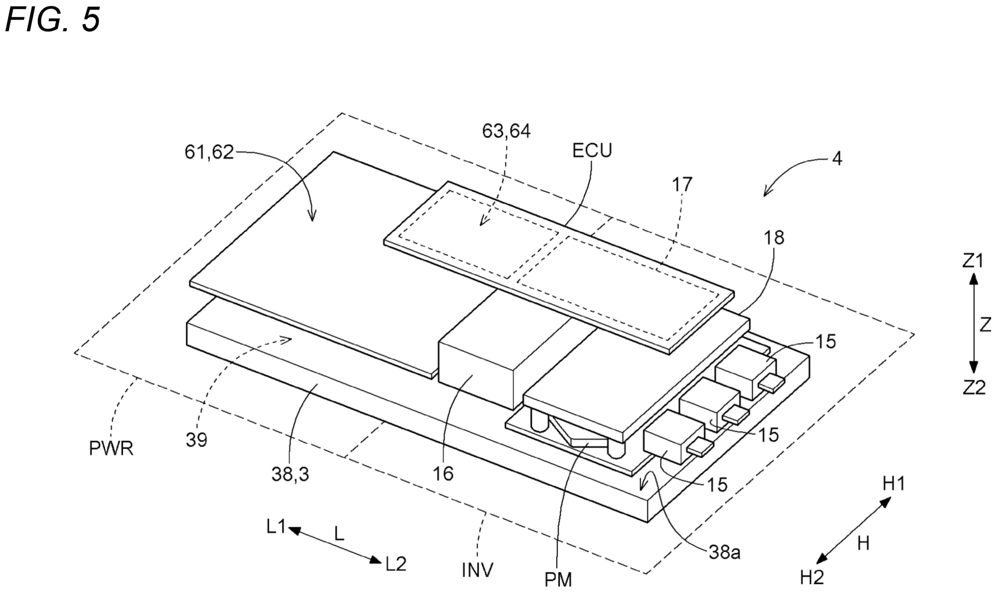

As illustrated in FIG. 1, the vehicle drive device 100 further includes an inverter module INV, a power supply module PWR, and a refrigerant circuit module 2. The inverter module INV is a circuit module that controls driving of the rotary electric machine MG. As illustrated in FIG. 3, the power supply module PWR includes at least one of a converter 61 (voltage conversion circuit) electrically connected to the on-vehicle battery BT for performing voltage conversion of the on-vehicle battery BT, a charging circuit electrically connected to the on-vehicle battery BT for charging the on-vehicle battery BT from the external power supply 60, and a feeding circuit electrically connected to the on-vehicle battery BT for externally feeding power from the on-vehicle battery BT. Note that, the present embodiment exemplifies a mode including a charging feeding circuit 62 having a bidirectional function of charging the on-vehicle battery BT and feeding power from the on-vehicle battery BT. That is, the charging feeding circuit 62 has functions of a charging circuit and a feeding circuit. In the present embodiment, as illustrated in FIG. 5, a high-voltage circuit unit 4 including the inverter module INV and the power supply module PWR is formed. The refrigerant circuit module 2 forms at least a part of the refrigerant circuit 20 (refer to FIG. 4) that circulates the refrigerant for the air conditioner.

In the present embodiment, the case 9 includes a first accommodation chamber E1 that accommodates the inverter module INV and the power supply module PWR (that is, the high-voltage circuit unit 4), and a second accommodation chamber E2 that accommodates the rotary electric machine MG and the power transmission mechanism GT (that is, the drive unit TA).

As illustrated in FIG. 1, the case 9 includes a case body 90, which is a core accommodation member of the first accommodation chamber E1 and the second accommodation chamber E2, and three cover members (first cover 93, second cover 94, and third cover 95). The case body 90 includes a first case portion 91 and a second case portion 92. The first case portion 91 is a portion in which the first accommodation chamber E1 that accommodates the inverter module INV and the power supply module PWR is formed. The second case portion 92 is a portion in which the second accommodation chamber E2 that accommodates the rotary electric machine MG and the power transmission mechanism GT is formed. Regarding the function of the "drive unit TA" that drives the wheel W, the power supply module PWR is not necessarily mounted on the vehicle drive device 100, and in this case, the first case portion 91 can also be referred to as a case that accommodates the inverter module INV.

In the present embodiment, the case 9 is integrally formed including the first accommodation chamber E1, the second accommodation chamber E2, and a partition wall 98 that partitions the first accommodation chamber E1 and the second accommodation chamber E2. That is, in the present embodiment, a mode in which the first case portion 91, the second case portion 92, and the partition wall 98 are integrally formed of the same material is exemplified. Note that, the structure of the case 9 is not limited thereto. In the case 9, the first case portion 91 and the second case portion 92 may be formed of different members, and may be integrated by a fastening member such as a bolt, welding or the like, without including the partition wall 98. In a case where the first case portion 91 and the second case portion 92 are formed of different members, a wall of at least one member is present at a boundary between the first case portion 91 and the second case portion 92. In a case where the case 9 is integrated by combining different members, one or both of the walls at the boundary may be considered as the partition wall 98.

The first case portion 91 is formed in a rectangular box shape in which the up-down direction Z upper side Z1 is opened in the vehicle mounted state. The first case portion 91 includes a peripheral wall portion 96 that surrounds the first opening portion 9a and is disposed so as to extend in the up-down direction Z in the vehicle mounted state. The first opening portion 9a is closed by the first cover 93. The first opening portion 9a is an opening portion of the case 9 that accommodates the inverter module INV, and the first cover 93 is a cover that closes the opening portion. In the present embodiment, he first accommodation chamber E1 and the second accommodation chamber E2 are arranged side by side in the up-down direction Z.

The second case portion 92 is formed in a tubular shape with both sides in the axial direction L opened, and includes a cylindrical peripheral wall portion 97. The cylindrical peripheral wall portion 97 surrounds the power transmission mechanism GT from the radially outer side and corresponds to a portion surrounding the second accommodation chamber E2 of the case 9. The opening portion formed on the axial direction second side L2 is a second opening portion 9b, and the opening portion formed on the axial direction first side L1 is a third opening portion 9c. The second opening portion 9b is closed by the second cover 94, and the third opening portion 9c is closed by the third cover 95. A through hole through which the above-described drive shaft (first drive shaft DS1 and second drive shaft DS2) passes is formed in each of the second cover 94 and the third cover 95.

The rotary electric machine MG functions as a driving force source of the pair of wheels W. As illustrated in FIG. 3, the rotary electric machine MG is electrically connected to the on-vehicle battery BT, which is a DC power supply formed of a power storage device such as a secondary battery or a capacitor, via an inverter circuit PM. The rotary electric machine MG has a function as a motor (electric motor) that receives electric power supply from the on-vehicle battery BT and generates power, and a function as a generator (generator) that receives power supply from the wheel W side and generates electric power. The rotary electric machine MG generates a driving force by powering with electric power stored in the on-vehicle battery BT, and generates electric power by the driving force transmitted from the pair of wheels W side to charge the on-vehicle battery BT. The on-vehicle battery BT is a high-voltage DC power supply having a rated voltage of about 48 volts to 400 volts.

Since the on-vehicle battery BT supplies electric power to the rotary electric machine MG serving as a driving force source of the wheel W, this has a large power capacity and a large size. For example, in order to secure a space such as a vehicle cabin (cabin), this is disposed under a cabin floor of the vehicle 10.

Note that, in the present embodiment, the on-vehicle battery BT is configured not only to be charged by the electric power generated by the rotary electric machine MG, but also to be chargeable by the electric power supplied from the external power supply 60 such as an AC commercial power supply having a rating of about 100 volts to 240 volts. Therefore, the on-vehicle battery BT is configured to be connectable to the external power supply 60 via the charging feeding circuit 62. FIG. 3 illustrates a mode in which the external power supply 60 and the charging feeding circuit 62 are connected by wire, for example, by an external connection port PT including a connector or the like. However, the present invention is not limited to such a mode, and for example, the external connection port PT contactlessly receives electric power from the external power supply 60 by electromagnetic induction or the like, and electric power is supplied to the on-vehicle battery BT via the charging feeding circuit 62. Note that, a charge feed control unit 64 is provided to control the charging feeding circuit 62.

In recent years, it has been proposed to use the on-vehicle battery BT of an electric vehicle or a hybrid electric vehicle as an emergency power supply at the time of disaster or the like. In order to be able to use the on-vehicle battery BT as such emergency power supply, the charging feeding circuit 62 is configured to have the function of the feeding circuit in addition to the function of the charging circuit. As a matter of course, in a case where use of such on-vehicle battery BT is not taken into consideration, the charging feeding circuit 62 may be configured to have only the function of the charging circuit.

In the present embodiment, the on-vehicle battery BT also supplies electric power to a low-voltage DC power supply B having a rated voltage of about 12 volts to 24 volts. The low-voltage DC power supply B serves as a power source for auxiliary machines such as a headlight, a power window, a power steering, an on-vehicle air conditioner, and an electric oil pump of the vehicle 10, and a power source for various control devices in the vehicle 10. Conventionally, in a general vehicle, the low-voltage DC power supply B has been charged with electric power generated by an alternator linked with a driving force source (for example, an internal combustion engine) of the vehicle. However, in the present embodiment, the low-voltage DC power supply B is configured to be charged with electric power from the on-vehicle battery BT (high-voltage DC power supply) having a higher voltage and a larger storage amount than those of the low-voltage DC power supply B. As a result, it is not necessary to mount the alternator, and a power loss of the driving force source (the rotary electric machine MG in a case of the present embodiment) of the vehicle due to the driving of the alternator can also be suppressed.

In order to charge the low-voltage DC power supply B with the electric power of the on-vehicle battery BT in this manner, the converter 61 (voltage conversion circuit) that performs voltage conversion of the on-vehicle battery BT is provided. As described above, since the rated voltage of the on-vehicle battery BT is higher than the rated voltage of the low-voltage DC power supply, the converter 61 is formed of, for example, a step-down DC/DC converter. The DC/DC converter includes a non-insulated type such as a chopper type or a charge pump type, and an insulated type using a transformer. In a case where it is preferable that the circuit supplied with electric power from the on-vehicle battery BT and the circuit supplied with electric power from the low-voltage DC power supply B be electrically insulated, the converter 61 is preferably an insulated type. The insulated DC/DC converter includes a switching element, and the converter 61 is controlled by the converter control unit 63.

Note that, some vehicles include an AC power supply socket (AC power supply socket) for supplying electric power to general home electric appliances or the like. Such AC power supply socket is configured to be able to output an alternating current having a rated voltage of 100 volts to 200 volts. AC power supplied from the AC power supply socket is generated from the on-vehicle battery BT using an inverter not illustrated. Such inverter also corresponds to the voltage conversion circuit, and in a case of including the inverter, the inverter and an inverter control unit that controls the inverter can also be included in the power supply module PWR.

In this manner, the power supply module PWR includes at least one of the converter 61 (voltage conversion circuit) that performs voltage conversion of the on-vehicle battery BT, the charging circuit for charging the on-vehicle battery BT by the external power supply 60, and the feeding circuit for feeding power from the on-vehicle battery BT to the outside, that are electrically connected to the on-vehicle battery BT. In the present embodiment, the charge feed control unit 64 and the converter control unit 63 described above also are included in the power supply module PWR.

As illustrated in FIG. 2, the rotary electric machine MG includes a stator 11 fixed to the case 9 and the rotor 12 connected to the rotor shaft 13 so as to rotate integrally with the rotor shaft 13. The rotary electric machine MG is an inner rotor type rotary electric machine, and the rotor 12 is disposed radially inside the stator 11. The rotary electric machine MG is a rotation magnetic field type rotary electric machine, and the stator 11 includes a stator core 11a and a stator coil 11b wound around the stator core 11a. The rotor 12 includes a rotor core 12a and a permanent magnet not illustrated fixed to the rotor core 12a. The rotor shaft 13 is formed in a tubular shape coaxial with the rotor core 12a, and a sun gear SG of a planetary gear mechanism forming the reducer 6 is disposed on an outer peripheral side on the axial direction first side L1 of the rotor shaft 13 so as to rotate integrally with the rotor shaft 13. As described later, the sun gear SG is an input element of the reducer 6.

As illustrated in FIG. 3, the rotary electric machine MG is driving controlled by a rotary electric machine control unit 17 on the basis of a target torque of the rotary electric machine MG set in accordance with an instruction from a vehicle control device 300, which is a higher-order control device. The rotary electric machine control unit 17 performs switching control on the inverter circuit PM formed of a plurality of switching elements, and causes the inverter circuit PM to convert electric power between a direct current and alternating currents of a plurality of phases (three phases in the present embodiment). An operating voltage of the rotary electric machine control unit 17 is about 3.3 volts to 5 volts, an input/output voltage of the inverter circuit PM is about 48 volts to 400 volts, and a voltage of a switching control signal of the switching element forming the inverter circuit PM is about 15 volts to 24 volts. Therefore, a driver 18 that amplifies the voltage of the switching control signal output from the rotary electric machine control unit 17, increases the driving force, and supplies the same to the inverter circuit PM is provided between the rotary electric machine control unit 17 and the inverter circuit PM.

The inverter circuit PM includes a plurality of switching elements. The inverter circuit PM includes a plurality of sets (here, three sets) of arms for AC one phase formed of a series circuit of an upper-stage side switching element on a positive electrode side and a lower-stage side switching element on a negative electrode side of the direct current. Each switching element is provided with a freewheel diode in which a direction from the negative electrode to the positive electrode (a direction from the lower-stage side to the upper-stage side) is a forward direction. As the switching element, it is preferable to apply a power semiconductor element such as an insulated gate bipolar transistor (IGBT), a power metal oxide semiconductor field effect transistor (MOSFET), a silicon carbide-metal oxide semiconductor FET (SiC-MOSFET), a SiC-static induction transistor (SiC-SIT), or a gallium nitride-MOSFET (GaN-MOSFET). In the present embodiment, the inverter circuit PM is formed as a power module in which the switching elements are integrated together with the freewheel diode.

When the rotary electric machine MG is driven, a large current flows through the switching elements forming the inverter circuit PM, and the switching elements generate heat. Therefore, a heat value of the inverter circuit PM including a plurality of switching elements is large. Therefore, in the present embodiment, as illustrated in FIG. 5, a cooling unit 38 that cools the switching element is provided. A cooling water path 39 through which cooling water circulates is formed in the cooling unit 38. Note that, cooling is not limited to a mode of direct heat exchange between a site to be cooled and the cooling water, and also includes a mode of heat exchange with the cooling water via a heat transfer medium such as oil or a heat sink.

The inverter module INV includes at least a switching element forming the inverter circuit PM and the cooling unit 38 that cools the switching element. In the present embodiment, as illustrated in FIG. 3, the inverter module INV further includes the rotary electric machine control unit 17 and the driver 18. That is, in the present embodiment, the inverter module INV includes the rotary electric machine control unit 17, the driver 18, the inverter circuit PM, and the cooling unit 38. As a matter of course, the inverter module INV may be formed of the switching element forming the inverter circuit PM and the cooling unit 38 without including the rotary electric machine control unit 17 and the driver 18.

Note that, as illustrated in FIG. 3, a DC link capacitor 16 (smoothing capacitor) that smooths the voltage on the DC side of the inverter circuit PM is provided on the DC side of the inverter circuit PM, that is, between the inverter circuit PM and the on-vehicle battery BT. The inverter module INV may include the DC link capacitor 16.

The rotary electric machine control unit 17 performs current feedback control on the basis of a rotational position of the rotor 12 (magnetic pole position of the permanent magnet), a rotational speed of the rotor 12, and a current flowing through the stator coil 11b of each of the three phases to control driving of the rotary electric machine MG via the inverter circuit PM. The rotational position of the rotor 12 is detected by a rotation sensor 14 such as a resolver or an inductive position sensor. The current flowing through the stator coil 11b is detected by a current sensor 15. As illustrated in FIG. 5, the current sensor 15 is preferably a contactless current sensor installed in the vicinity of a power line such as a bus bar connecting the inverter circuit PM and the stator coil 11b of the rotary electric machine MG, for example.

The power supply module PWR includes at least the converter 61 (voltage conversion circuit) and the charging feeding circuit 62. In the present embodiment, as illustrated in FIG. 5, the converter 61 and the charging feeding circuit 62 are formed using a common substrate. In the present embodiment, as illustrated in FIG. 3, the power supply module PWR includes the converter 61, the converter control unit 63, the charging feeding circuit 62, and the charge feed control unit 64.

Note that, in the present embodiment, the rotary electric machine control unit 17 included in the inverter module INV, and the converter control unit 63 and the charge feed control unit 64 included in the power supply module PWR are formed on one and the same substrate to form a control board ECU. The control board ECU can also be referred to as an integrated control board in which functions of a plurality of control units are integrated.

In the present embodiment, as illustrated in FIG. 5, the inverter circuit PM (switching element), the DC link capacitor 16, the converter 61, and the charging feeding circuit 62 are attached to a cooling unit first surface 38a, which is an upper surface of the cooling unit 38. The DC link capacitor 16 that smooths a DC voltage that generates pulsation generates heat when a current flows in and out. The converter 61 includes a switching element, and the switching element also generates heat by the current flowing during a switching operation. Since a current supplied from the external power supply 60 to charge the on-vehicle battery BT also flows through the charging feeding circuit 62, this generates heat. The cooling unit 38 includes the cooling water path 39 through which the cooling water circulates, and these heat generating members are attached to the cooling unit first surface 38a and are appropriately cooled. Note that, the inverter circuit PM has the highest heat value and has the highest temperature.

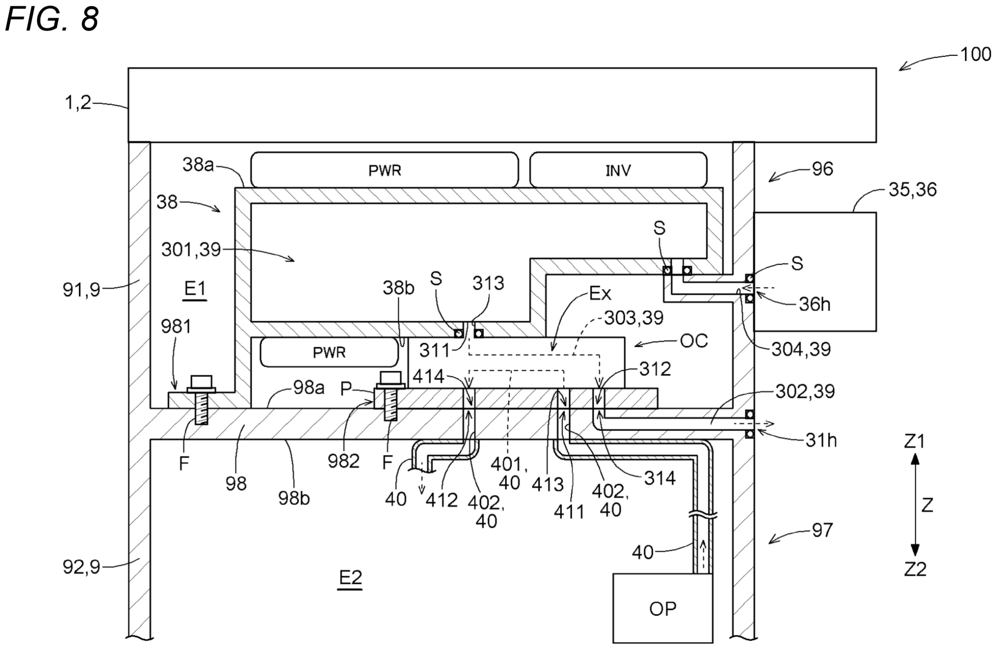

The cooling water path 39 may be formed in such a manner that a portion that cools the inverter module INV including the inverter circuit PM is on a downstream side and a portion that cools the power supply module PWR is on an upstream side, or may be formed in such a manner that the portion that cools the inverter module INV is on the upstream side and the portion that cools the power supply module PWR is on the downstream side. In a schematic block diagram and a cross-sectional view of FIGS. 4 and 8, it seems that the cooling water path 39 is provided so that the cooling water flows from the inverter module INV side to the power supply module PWR side, but this does not limit a positional relationship between the cooling unit 38 and the cooling target (inverter module INV, power supply module PWR).

For example, when the cooling water path 39 is formed in the cooling unit 38 in such a manner that the cooling water flows from the power supply module PWR side to the inverter module INV side, the cooling water is circulated from a region where the heat value is low to a region where the heat value is high, so that the cooling target that generates heat can be appropriately cooled in a state in which a rise in temperature of the cooling water is suppressed. When the rotary electric machine MG is driven, that is, when the vehicle 10 is traveling, the on-vehicle battery BT is scarcely charged by the external power supply 60. There may be a mode in which power is contactlessly fed from a feeding device installed on a road while the vehicle is traveling on the road, but this is not generally put into practical use. Therefore, when the rotary electric machine MG is driven, the charging feeding circuit 62 often stops. The current flowing when the low-voltage DC power supply B is charged is smaller than the current flowing through the charging feeding circuit 62 when the on-vehicle battery BT is charged, and the heat value is also smaller. Therefore, even when the low-voltage DC power supply B is charged while the rotary electric machine MG is being driven, the heat value of the converter 61 is smaller than that of the charging feeding circuit 62. Therefore, even if the cooling water is circulated in such a route, the inverter circuit PM can be appropriately cooled.

The driver 18 is disposed on the up-down direction Z upper side Z1 of the inverter circuit PM. The control board ECU is disposed across the rotary electric machine control unit 17, the converter control unit 63, and the charge feed control unit 64. In general, the control board ECU is disposed in such a manner that the inverter circuit PM, the driver 18, and the rotary electric machine control unit 17 overlap, the converter 61 and the converter control unit 63 overlap, and the charging feeding circuit 62 and the charge feed control unit 64 overlap as seen in the up-down direction. In the present embodiment, as illustrated in FIGS. 1 and 5, the power supply module PWR is disposed adjacent to the axial direction first side L1 with respect to the inverter module INV. The control board ECU is disposed across the rotary electric machine control unit 17, the converter control unit 63, and the charge feed control unit 64 in the axial direction L. As illustrated in FIG. 1, the control board ECU is disposed between the inverter circuit PM (switching element) and the refrigerant circuit module 2 in the up-down direction Z.

As illustrated in FIG. 2, the reducer 6 is formed as the planetary gear mechanism including the input element that rotates integrally with the rotor shaft 13, a fixed element fixed to the case 9, an output element that rotates integrally with the differential input element (differential case 50), and a planetary gear. This planetary gear mechanism is a complex planetary gear mechanism including one sun gear SG, two ring gears (first ring gear RG1 and second ring gear RG2), two planetary gears (first planetary gear PG1 and second planetary gear PG2) that rotate integrally, and a carrier CR that rotatably supports the two planetary gears. In the present embodiment, the first planetary gear PG1 is formed to have a smaller diameter than that of the second planetary gear PG2.

The sun gear SG rotates integrally with the rotor 12 and the rotor shaft 13. The second ring gear RG2 is fixed to the case 9. The first ring gear RG1 is disposed on the axial direction first side L1 with respect to the second ring gear RG2, and is connected to the differential case 50 so as to rotate integrally with the differential case 50. The second planetary gear PG2 meshes with the sun gear SG and the second ring gear RG2, and the first planetary gear PG1 rotates integrally with the second planetary gear PG2 and meshes with the first ring gear RG1. In the present embodiment, the sun gear SG is the input element, the second ring gear RG2 is the fixed element, and the first ring gear RG1 is the output element. The carrier CR is not connected to any rotating element or fixed element.

The differential gear mechanism 5 is a differential gear mechanism of a bevel gear type, and includes a pinion gear 51 and a side gear 52 of a bevel gear type. The pinion gear 51 is supported by the differential case 50 and is rotatably supported by a pinion shaft 55 disposed so as to extend in the radial direction. The pinion shaft 55 rotates integrally with the differential case 50, and the pinion gear 51 is rotatable (rotatable) about the pinion shaft 55 and rotatable (revolvable) about the rotation axis A of the differential case 50. A plurality of pinion shafts 55 are arranged radially (for example, in a cross shape) about the rotation axis A of the differential case 50, and the pinion gear 51 is attached to each of the plurality of pinion shafts 55. The differential case 50 accommodates the pinion gear 51, the side gear 52, and the pinion shaft 55 therein.

The pair of side gears 52 including the first side gear 53 and the second side gear 54 are arranged apart from each other in the axial direction L. The first side gear 53 and the second side gear 54 mesh with each of the plurality of pinion gears 51, and are disposed to rotate about the rotation axis A of the differential case 50. As illustrated in FIG. 2, the first side gear 53 is connected to the connection shaft J that extends in the axial direction L through the inside in the radial direction of the reducer 6 and the rotor shaft 13 in a hollow tubular shape. The connection shaft J is connected so as to rotate integrally with the first drive shaft DS1 drivingly connected to the first wheel W1, which is the wheel W on the axial direction second side L2. Therefore, the first side gear 53 is drivingly connected to the first wheel W1 via the connection shaft J. The second side gear 54 is connected so as to rotate integrally with the second drive shaft DS2 drivingly connected to the second wheel W2, which is the wheel W on the axial direction first side L1.

All the first drive shaft DS1, the second drive shaft DS2, the connection shaft J, the first side gear 53, and the second side gear 54 that are drivingly connected to the wheels W and rotate integrally with the wheels W can be regarded as rotating members corresponding to output members. The first side gear 53 and the second side gear 54 can be referred to as the differential gear mechanism 5 and the output members. Note that, each of the first side gear 53 and the second side gear 54 includes a gear unit meshing with the pinion gear 51 and the spline engagement unit 59 connected to the connection shaft J and the second drive shaft DS2. In a case of considering functionally separately, the gear unit corresponds to the rotating member included in the differential gear mechanism 5, and the spline engagement unit 59 corresponds to the output member.

In such vehicle drive device 100, the rotary electric machine MG and the power transmission mechanism GT are often lubricated (including cooled) by oil, and the vehicle drive device 100 of the present embodiment is also lubricated by oil. For example, the oil accumulated in an oil reservoir formed on the lower side Z2 of the case 9 is scraped up by the oil pump OP (refer to FIGS. 4, 6, and 8) or a gear of the power transmission mechanism GT to be supplied to a site to be lubricated such as a bearing and a site to be cooled such as the stator coil 11b of the rotary electric machine MG. The oil flow path 40 illustrated in FIG. 4 exemplifies a mode in which oil discharged from the oil pump OP is supplied to the rotary electric machine MG (bearings or the like of the stator coil 11b and the rotor shaft 13) and the power transmission mechanism GT (bearing or the like of each gear). As a matter of course, since the temperature of the oil used for cooling rises, an oil cooler OC for cooling the oil is also connected to the oil flow path 40. The oil cooler OC cools the oil by heat exchange with the cooling water. Note that, the oil flow path 40 includes a flow path formed on a wall of the case 9, a rotation shaft of the rotating member or the like, and a flow path formed of a pipe or the like disposed in the case 9.

As described above, the inverter module INV includes the cooling unit 38 that cools the switching element forming the inverter circuit PM. Therefore, the vehicle drive device 100 includes a cooling water circuit module 3 including a cooling water circuit 30 including the cooling water path 39 that circulates the cooling water in a route passing through the cooling unit 38 and the radiator 37 (on-vehicle radiator). As illustrated in FIG. 4, the radiator 37, a first water pump 36, the cooling unit 38, and a three-way valve 35 are connected to the cooling water circuit 30. The cooling water circuit module 3 includes at least a water path (cooling water path 39) formed in the case 9 and the cooling unit 38. The cooling water circuit module 3 may further include the three-way valve 35 and the first water pump 36. The cooling water cooled (of which heat is radiated) by the radiator 37 is sent to the cooling water circuit 30 by the first water pump 36, takes heat from the inverter module INV and the power supply module PWR in the cooling unit 38, and returns to the radiator 37 through the three-way valve 35 and heat thereof is discharged.

As illustrated in FIG. 4, the above-described oil cooler OC is also connected to the cooling water circuit 30. The oil cooler OC cools the oil flowing through the oil flow path 40 by heat exchange with the cooling water flowing through the cooling water circuit 30. The water-cooled condenser 31 (refrigerant heat exchanger) is also connected to the cooling water circuit 30. The water-cooled condenser 31 exchanges heat between the refrigerant of the on-vehicle air conditioner and the cooling water to cool the refrigerant of which temperature has raised.

The cooling water of which temperature has raised through the cooling unit 38, the oil cooler OC, and the water-cooled condenser 31 returns to the radiator 37 through the three-way valve 35 and heat of which is discharged. However, heat radiation by the radiator 37 is not necessary in a case where heat discharge is not required in cold weather or the like, in a case where it is desired to raise the temperature of oil by cooling water conversely, in a case where rapid heating is performed by the on-vehicle air conditioner or the like. In such a case, the three-way valve 35 switches a flow path of the cooling water so as to circulate the cooling water without passing through the radiator 37.

As described above, the water-cooled condenser 31 is connected to the refrigerant circuit 20 through which the refrigerant of the on-vehicle air conditioner flows. In the refrigerant circuit 20, a route (first flow path 20a) from the water-cooled condenser 31 via a first valve V1 through the evaporator 44 to the accumulator 41, and a route (second flow path 20b) from the water-cooled condenser 31 via a second valve V2 to the accumulator 41 and thereafter returning to the water-cooled condenser 31 through the compressor 42 and the cabin condenser 43 and via a third valve V3 are formed.

The evaporator 44 is a functional component serving as a core of cooling, and removes heat from the surroundings by vaporizing the refrigerant to release cool air into the vehicle cabin. The accumulator 41 separates liquid from the refrigerant in which gas and liquid are mixed, and supplies only gas (refrigerant gas) to the compressor 42. The compressor 42 compresses a refrigerant gas having a relatively low temperature and a relatively low pressure to implement a high temperature and a high pressure. The cabin condenser 43 is a heat source for heating by a heat pump system, and releases heat condensed by the compressor 42 into the vehicle cabin. The refrigerant that exits the cabin condenser 43 flows to the water-cooled condenser 31 via the third valve V3, which is an expansion valve.

The compressor 42, the cabin condenser 43, and the evaporator 44 described above are included in a cabin air conditioning unit 45 that adjusts the temperature and air volume at the time of cooling and heating and selects an air outlet in the on-vehicle air conditioner.

In the present embodiment, a battery heat sink 34 also cools the on-vehicle battery BT by heat exchange with the cooling water, and the cooling water of which temperature has risen is cooled by heat exchange with the refrigerant in a chiller 32. Therefore, a third flow path 20c is formed as a route through which the refrigerant reaches the accumulator 41 from the water-cooled condenser 31 via a fourth valve V4 and the chiller 32.

To the chiller 32, a second cooling water circuit 30B through which the cooling water output from the chiller 32 returns to the chiller 32 through the battery heat sink 34 and the second water pump 33. Similarly to the water-cooled condenser 31, the chiller 32 exchanges heat between the cooling water and the refrigerant, and cools the cooling water by taking heat from the cooling water. The cooling water of which temperature has risen due to heat exchange with the battery heat sink 34 is cooled in the chiller 32. By providing the second cooling water circuit 30B for cooling the on-vehicle battery BT and the third flow path 20c for cooling the cooling water flowing through the second cooling water circuit 30B, even in a case where the current flowing through the on-vehicle battery BT increases and the temperature of the on-vehicle battery BT rises, such as during rapid charging or high speed traveling, restriction of an input/output current to/from the on-vehicle battery BT can be easily alleviated.

As described above, the refrigerant circuit 20 includes the first flow path 20a including a flow path of the refrigerant from the water-cooled condenser 31 (refrigerant heat exchanger) to the evaporator 44, the second flow path 20b including a flow path of the refrigerant from the compressor 42 to the water-cooled condenser 31, and the third flow path 20c including a flow path of the refrigerant including the chiller 32. The refrigerant flowing through the first flow path 20a is lower in temperature than that in the second flow path 20b and the third flow path 20c. The refrigerant flowing through the third flow path 20c is lower in temperature than that in the second flow path 20b.

A part of the flow path forming the refrigerant circuit 20 can be formed using the first cover 93 of the case 9. For example, as illustrated in FIG. 1, a control valve V (first valve V1, second valve V2, third valve V3, and fourth valve V4) that controls a flow rate or a flow path of the refrigerant in the refrigerant circuit 20 is attached to a first cover first surface 93a of the first cover 93. In the present embodiment, the refrigerant circuit module 2 includes the refrigerant circuit 20 and the control valve V formed in the first cover 93. Note that, a portion of the first cover 93 in which the refrigerant circuit 20 is formed is referred to as the refrigerant manifold 21.

The water-cooled condenser 31, the chiller 32, and the accumulator 41 as functional components forming the flow path of the refrigerant in the refrigerant circuit 20 are attached to the refrigerant circuit module 2. The refrigerant circuit module 2 and these functional components together form a refrigerant module 1. Note that, in a case where the on-vehicle battery BT is not cooled using the cooling water, that is, in a case where the third flow path 20c is not formed, the chiller 32 is not required to be provided. Therefore, the refrigerant circuit module 2, the water-cooled condenser 31, and the accumulator 41 may form the refrigerant module 1. Note that, the refrigerant circuit module 2 only needs to form at least a part of the refrigerant circuit that circulates the refrigerant for the on-vehicle air conditioner, and in addition to the refrigerant manifold 21, the water-cooled condenser 31, the chiller 32, and the accumulator 41 may also be included in the refrigerant circuit module 2 in addition to the control valve V.

Note that, a refrigerant path component includes the control valve V and the functional component, and the functional component includes the water-cooled condenser 31, the chiller 32, and the accumulator 41. In the present embodiment, although not included in the refrigerant module 1, the compressor 42, the cabin condenser 43, the evaporator 44, and the battery heat sink 34 are also functional components. The second water pump 33 is also a functional component, and, for example, as illustrated in FIG. 4, in a case where the second water pump 33 is also provided integrally with the vehicle drive device 100, this can be included in the refrigerant module 1. As illustrated in FIG. 1, the accumulator 41 is included in the refrigerant module 1 in a case of being attached to the first cover 93, but this may be disposed separately from the vehicle drive device 100 and not included in the refrigerant module 1.

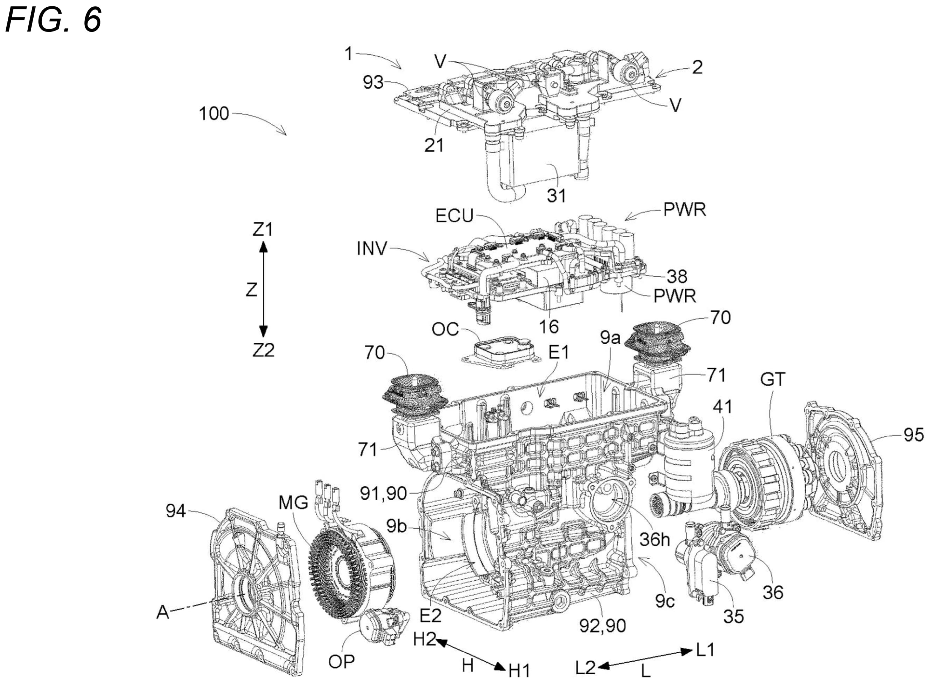

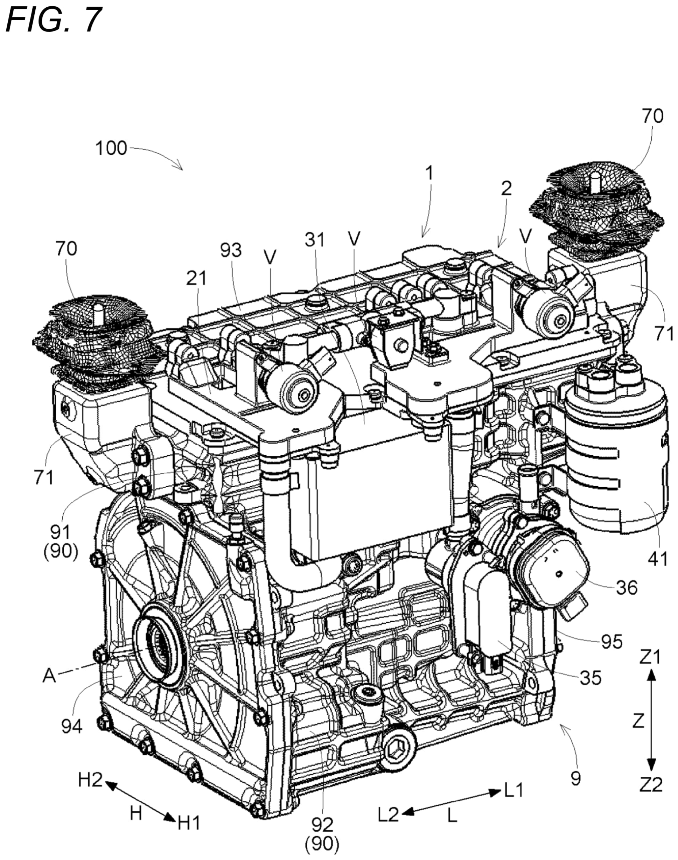

FIG. 6 is an exploded perspective view illustrating a preferred configuration example of the above-described vehicle drive device 100, and corresponds to the schematic exploded perspective view of FIG. 1. FIG. 7 is an external perspective view illustrating a preferred configuration example of the vehicle drive device 100. Although not illustrated in FIG. 1 or the like, as illustrated in FIGS. 6 to 7, the vehicle drive device 100 is supported by a vehicle body (for example, a cross member) of the vehicle via a mount member 70. The mount member 70 is connected to the case 9 via a mount bracket 71.

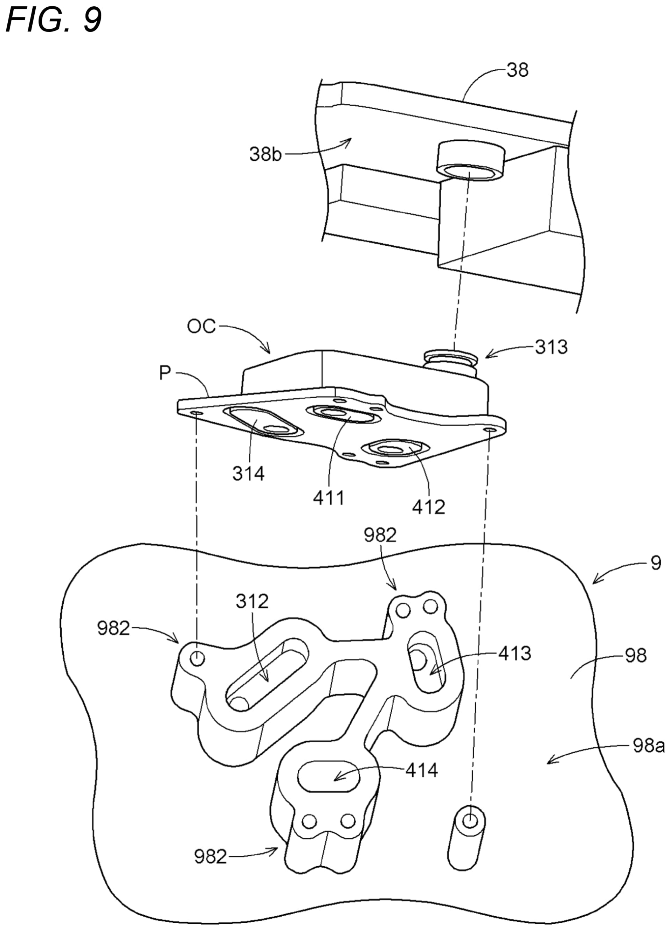

As illustrated in FIG. 4, the vehicle drive device 100 of the present embodiment has a structure capable of efficiently cooling a plurality of cooling targets, specifically, the inverter module INV, the power supply module PWR, and lubricating oil using cooling water. For this purpose, it is necessary to set a circulation route of the cooling water so that the cooling water circulates via the respective cooling targets. At that time, it is also conceivable to dispose piping outside the case 9 to connect flow paths through which the cooling water passes in the case 9. However, if there are many pieces of piping outside the case 9, a mounting space in the vehicle increases, and mounting efficiency of the vehicle drive device 100 on the vehicle decreases. The total extension of the piping becomes long, so that a pressure loss increases, and a load on a pump that circulates the cooling water also increases. The vehicle drive device 100 according to the present embodiment is configured to be able to appropriately cool the cooling target by reducing an installation space and the pressure loss to appropriately form the flow path of the cooling water that is a cooling fluid. Hereinafter, description will be given with reference to FIGS. 8 and 9.

FIG. 8 is a schematic cross-sectional view of the first accommodation chamber E1 and the second accommodation chamber E2 with the partition wall 98 interposed therebetween. In the first accommodation chamber E1, the cooling unit 38 as a cooling fluid path forming member is disposed so as to be in contact with at least one of the inverter module INV and the power supply module PWR. The inverter module INV and the power supply module PWR to be cooled are arranged side by side on the cooling unit first surface 38a as described above with reference to FIG. 5. The arrangement of the inverter module INV and the power supply module PWR in FIG. 8 is schematic and does not limit the configuration. In the present embodiment, a mode in which a part of the power supply module PWR is also disposed on the up-down direction Z lower side Z2 is exemplified, but this may be arranged only on the upper side Z1 of the cooling unit 38. A part of the inverter module INV may be disposed on the lower side Z2 of the cooling unit 38.

That is, it is preferable that the inverter module INV and the power supply module PWR be disposed on the cooling unit first surface 38a, or the inverter module INV and the power supply module PWR be disposed on the cooling unit second surface 38b and the cooling unit first surface 38a. Since the inverter module INV and the power supply module PWR are disposed in the first accommodation chamber E1, which is the same accommodation space, together with the cooling fluid path forming member (cooling unit 38), the inverter module INV and the power supply module PWR, which are heat generating members, can be appropriately cooled at one site by a simple cooling structure. For example, in a case where the inverter module INV and the power supply module PWR are cooled by an oil path or the like formed on a surface (a surface of an inner wall) of the case 9, it is conceivable that the oil path cannot be routed on the surface of the case 9, and there is a possibility that cooling performance is deteriorated or a scale of an entire device is increased in order to secure the cooling performance. However, by accommodating the inverter module INV and the power supply module PWR in the same first accommodation chamber E1, and similarly disposing the inverter module INV and the power supply module PWR so as to be in contact with one or both of the cooling unit first surface 38a and the cooling unit second surface 38b of the cooling unit 38 disposed in the first accommodation chamber E1, a smaller vehicle drive device 100 can be formed.

A first cooling water path 301 (first cooling fluid path) through which the cooling water flows is formed inside the cooling unit 38. That is, in the cooling unit 38, the first cooling water path 301 through which the cooling water flows independently from the case 9 is formed inside the cooling unit 38. Since the cooling fluid path forming member (cooling unit 38) is not a plate such as a so-called heat sink in which an oil path or the like is formed on a surface of the member, but a member in which the cooling water path independent from the case 9 is formed, for example, it is possible to appropriately cool the cooling target (here, the inverter module INV and the power supply module PWR).

As also illustrated in the exploded perspective view of FIG. 6, a first water pump connection port 36h to which the first water pump 36 is connected is formed on a wall surface of the first accommodation chamber E1. As also illustrated in the external perspective view of FIG. 7, the first water pump 36 is attached to an outer wall of the case 9 together with the three-way valve 35. As illustrated in FIG. 8, the first water pump 36 is connected to the first cooling water path 301 inside the cooling unit 38 via a cooling water path (fourth cooling water path 304) inside the case 9 without providing piping or the like outside the case 9. A reference sign "S" in FIG. 8 represents a seal member such as an O-ring, for example.

In the present embodiment, the oil cooler OC as a connection member is disposed on the lower side Z2 of the cooling unit 38 in the first accommodation chamber E1. A connection mode or the like between the cooling unit 38 and the oil cooler OC will be described later.

The first cooling water path 301 (first cooling fluid path) through which the cooling water flows is formed inside the cooling unit 38. A second cooling water path 302 (second cooling fluid path) through which the cooling fluid flows is formed inside case 9. The first cooling water path 301 and the second cooling water path 302 are connected inside the first accommodation chamber E1. In the present embodiment, the mode in which the second cooling water path 302 is formed inside the partition wall 98 is exemplified, but the second cooling water path 302 may be formed in a place other than the partition wall 98 as long as it is inside the case 9.

As illustrated in FIG. 8, the second cooling water path 302 is a cooling water path 39 (outlet flow path) through which the cooling water is discharged from the cooling unit 38, but may be the cooling water path 39 (inlet flow path) through which the cooling water flows into the cooling unit 38. For example, the fourth cooling water path 304 illustrated in FIG. 8 can also be referred to as the cooling water path 39 formed inside the wall (peripheral wall portion 96 or cylindrical peripheral wall portion 97) of the case 9 through which the cooling water flows. Therefore, in the present embodiment, both the cooling water path 39 represented by a reference sign "302" and the cooling water path 39 represented by a reference sign "304" can be referred to as "the second cooling fluid path formed inside the wall of the case 9". The "second cooling fluid path" may be both the inlet flow path and the outlet flow path, or may be either one of them.

Note that, as apparent from this example, in a case where it is referred to that "the flow path such as the cooling water path 39 (cooling fluid path) is formed inside the wall of the case 9", it is not limited to a mode in which the flow path is formed so as to extend along the wall surface like the second cooling water path 302, and a mode in which the flow path is formed inside the wall by penetrating the wall like the fourth cooling water path 304 and the second oil flow path 402 described later is included.

As described above, since the first cooling water path 301 and the second cooling water path 302 are connected inside the first accommodation chamber E1, the route of the cooling water path can be easily formed short, and the pressure loss in the cooling water path can be easily reduced. Connecting work of the first cooling water path 301 and the second cooling water path 302 is easily facilitated.

As illustrated in FIG. 8, a first connection port 311 of the first cooling water path 301 is provided on the cooling unit second surface 38b. A second connection port 312 of the second cooling water path 302 is provided on a partition wall first surface 98a. Here, the first connection port 311 is a connection port with another member in the first cooling water path 301, and the second connection port 312 is a connection port with another member in the second cooling water path 302. The cooling unit second surface 38b is a surface facing the lower side Z2 on the partition wall 98 side of the cooling unit 38, and the partition wall first surface 98a is a surface facing the upper side Z1 on the cooling unit 38 side of the partition wall 98. Since the cooling unit second surface 38b and the partition wall first surface 98a face each other, it is easy to facilitate the connecting work of the first cooling fluid path (first cooling water path 301) and the second cooling fluid path (second cooling water path 302) when the cooling fluid path forming member (cooling unit 38) is assembled to the case 9 is easily facilitated.

Note that, as illustrated in FIG. 8, in the present embodiment, a mode in which the first cooling water path 301 and the second cooling water path 302 are not directly connected to each other, but are connected to each other via the "connection member" is exemplified. In the present embodiment, the oil cooler OC is exemplified as the connection member. However, the first cooling water path 301 and second cooling water path 302 may be directly connected to each other without the connection member. In a case where the first cooling water path 301 and the second cooling water path 302 are connected via the connection member, the connection member may be other than the oil cooler OC. For example, the connection member may be a pipe or the like.

As described above, in the present embodiment, the oil cooler OC as the connection member is disposed between the cooling unit 38 and the partition wall 98. As also illustrated in FIG. 9, the oil cooler OC includes a cooling water inlet 313 (third connection port) connected to the first connection port 311 and a cooling water outlet 314 (fourth connection port) connected to the second connection port 312. The cooling water inlet 313 is formed in a tubular shape protruding to the upper side Z1 in a state in which the oil cooler OC is attached to the case 9. An O-ring as a seal member S is attached to an outer peripheral portion of the tubular cooling water inlet 313, and the tubular cooling water inlet 313 is inserted into the first connection port 311, which is an opening portion provided on the cooling unit second surface 38b, so that the first cooling water path 301, which is the cooling water path 39 of the cooling unit 38, and the third cooling water path 303, which is the cooling water path 39 inside the oil cooler OC, are connected.

As illustrated in FIGS. 8 and 9, the oil cooler OC includes a flat pedestal portion P. On the pedestal portion P, an opening portion opened on the lower side Z2 is formed in a state in which the oil cooler OC is attached to the case 9 (partition wall 98). In the present embodiment, three opening portions including an opening portion as the cooling water outlet 314 (fourth connection port), an opening portion as an oil inlet 411, and an opening portion as an oil outlet 412 are formed. The cooling water outlet 314 is connected to the second connection port 312 formed on the partition wall 98 as illustrated in FIGS. 8 and 9 via a seal member (not illustrated) provided between the pedestal portion P and the partition wall 98. The oil inlet 411 and the oil outlet 412 to be described later are similarly connected to an oil path first connection port 413 and an oil path second connection port 414, respectively, via a seal member (not illustrated) provided between the pedestal portion P and the partition wall 98.

In this manner, the oil cooler OC is provided with the cooling water inlet 313, the cooling water outlet 314, the oil inlet 411, and the oil outlet 412, and the third cooling water path 303, which is a part of the cooling water path 39, and a first oil flow path 401, which is a part of the oil flow path 40, are formed inside the oil cooler OC. Although simplified in FIG. 8, the third cooling water path 303 and the first oil flow path 401 are formed in a meandering state so as to sufficiently secure a length extending adjacent to each other, and are configured to cool the oil by appropriately performing heat exchange between the cooling water and the oil.

As illustrated in FIG. 8, the partition wall 98 is provided with a first attachment portion 981 to which the cooling unit 38 is attached. As illustrated in FIGS. 8 and 9, the partition wall first surface 98a is also provided with a second attachment portion 982 to which the oil cooler OC is attached. The cooling unit 38 is fastened and fixed to the first attachment portion 981 by a fastening member F. The oil cooler OC is fastened and fixed to the second attachment portion 982 by the fastening member F. The second connection port 312 and the fourth connection port (cooling water outlet 314) are connected by attaching the oil cooler OC to the second attachment portion 982. That is, by fastening and fixing the oil cooler OC to the second attachment portion 982, the cooling water outlet 314 and the second connection port 312 are brought into pressure contact with each other, and the cooling water path 39 is connected while securing liquid tightness. Similarly, the oil inlet 411 and the oil path first connection port 413 are also in pressure contact with each other, and the oil outlet 412 and the oil path second connection port 414 are also in pressure contact with each other, so that the oil flow path 40 is connected while securing liquid tightness. In a state in which the oil cooler OC is attached to the second attachment portion 982 and the cooling unit 38 is attached to the first attachment portion 981, the first connection port 311 and the third connection port (cooling water inlet 313) are connected as described above.

In other words, the first connection port 311, the second connection port 312, the third connection port (cooling water inlet 313), and the fourth connection port (cooling water outlet 314) are configured in such a manner that the connection member (for example, the oil cooler OC) and the cooling unit 38 are attached to the case 9 (partition wall 98) as described above, and the first connection port 311, the second connection port 312, the cooling water inlet 313 (third connection port), and the cooling water outlet 314 (fourth connection port) are connected. In this manner, the first cooling fluid path (first cooling water path 301) and the second cooling fluid path (second cooling water path 302) can be connected only by assembling the connection member (for example, the oil cooler OC) and the cooling fluid path forming member (the cooling unit 38) to the partition wall 98 of the case 9. Therefore, the connecting work of the first cooling fluid path (first cooling water path 301) and the second cooling fluid path (second cooling water path 302) is easily facilitated.

The second connection port 312 provided on the partition wall 98 is a connection port opened to one end side of the second cooling water path 302 formed inside the partition wall 98, and communicates with the second cooling water path 302. The other end side of the second cooling water path 302 communicates with an external connection port 31h opened toward the outside of the case 9. Although not illustrated, to the external connection port 31h, another member such as the water-cooled condenser 31 may be directly connected, or piping connecting with another member such as the water-cooled condenser 31 may be connected.

As illustrated in FIG. 8, the second accommodation chamber E2 formed on the partition wall second surface 98b side is provided with the oil flow path 40 as an oil path through which oil for lubricating and cooling the rotary electric machine MG and the power transmission mechanism GT flows. A part of the oil flow path 40 is also formed inside the partition wall 98 and the connection member (for example, the oil cooler OC). Specifically, the first oil flow path 401 as a part of the oil flow path 40 is formed inside the oil cooler OC. The second oil flow path 402 is formed inside the partition wall 98. Note that, the second oil flow path 402 corresponds to a "specific oil path section" described later. As in the present embodiment, the connection member preferably functions as a heat exchanger (oil cooler OC) that performs heat exchange between cooling water and oil. By using the heat exchanger (oil cooler OC) that performs heat exchange between the cooling fluid and the oil as the connection member that connects the first cooling fluid path (first cooling water path 301) and the second cooling fluid path (second cooling water path 302), the vehicle drive device 100 can be easily downsized as compared with a case where the heat exchanger (oil cooler OC) and the connection member are provided separately.

From another point of view, it can be said that the first accommodation chamber E1 is provided with the cooling water path 39 (cooling fluid path) through which the cooling water (cooling fluid) for cooling at least one of the inverter module INV and the power supply module PWR flows, and the second accommodation chamber E2 is provided with the oil flow path 40 (oil path) through which the oil for lubricating and cooling the rotary electric machine MG and the power transmission mechanism GT flows. It can be said that the case 9 supports a heat exchange unit Ex that performs heat exchange between the cooling water and the oil. The cooling water path 39 and the oil flow path 40 are connected to the heat exchange unit Ex. As illustrated in FIG. 8, a part of the cooling water path 39 and a part of the oil flow path 40 are formed inside the partition wall 98. A part of the cooling water path 39 formed inside the partition wall 98 is referred to as a specific cooling fluid path section, and a part of the oil flow path 40 is referred to as the specific oil path section. In the present embodiment, the second cooling water path 302 corresponds to the specific cooling fluid path section, and the second oil flow path 402 corresponds to the specific oil path section.

Note that, each of the "specific cooling fluid path section" and the "specific oil path section" are connected to the heat exchange unit Ex, but a distance from the heat exchange unit Ex is not limited. It is sufficient that the "specific cooling fluid path section" and the heat exchange unit Ex are directly connected to each other, and the "specific oil path section" and the heat exchange unit Ex are directly connected to each other even when the "specific cooling fluid path section" and the "specific oil path section" are separated from the heat exchange unit Ex corresponding to a separation distance between the partition wall 98 on which the "specific cooling fluid path section" and the "specific oil path section" are formed and the heat exchange unit Ex.

Since the specific cooling fluid path section and the specific oil path section are formed inside the partition wall 98, it is easy to reduce the pressure loss by shortening the routes of the cooling fluid path (cooling water path 39) and the oil path (oil flow path 40) and it is easy to downsize the vehicle drive device 100 as compared with a case where at least one of the specific cooling fluid path section and the specific oil path section is disposed in a place other than the partition wall 98 such as the outside of the case 9.

As described above, in the present embodiment, the oil cooler OC as the heat exchanger including the heat exchange unit Ex is disposed in the first accommodation chamber E1. As a result, it is possible to form a flow path of the cooling fluid (for example, cooling water) without disposing the cooling fluid path (cooling water path 39) in the second accommodation chamber E2 in which the rotary electric machine MG serving as a heat source is disposed. Alternatively, even in a case where the cooling fluid path (cooling water path 39) is disposed in the second accommodation chamber E2 in which the rotary electric machine MG serving as the heat source is disposed, it is easy to shorten a section in which the cooling fluid path (cooling water path 39) is disposed in the second accommodation chamber E2. Therefore, it is easy to keep temperature of the cooling fluid for cooling at least one of the inverter module INV and the power supply module PWR low.

Note that, the heat exchange unit Ex may be the oil cooler OC provided as a member different from the case 9 as in the present embodiment; however, for example, a mode in which the heat exchange can be performed by disposing the cooling water path 39 and the oil flow path 40 close to each other in the case 9 by utilizing the wall or the like of the case 9 is also possible. Therefore, the configuration in which "the heat exchange unit Ex is supported by the case 9" is not limited to the mode in which the oil cooler OC is supported by the partition wall 98 of the case 9 as in the present embodiment, and may be a mode in which the heat exchange unit Ex is formed inside the partition wall 98, a mode in which the oil cooler OC or the like is supported inside the outer peripheral wall (for example, the peripheral wall portion 96 or the cylindrical peripheral wall portion 97) of the case 9, or a mode in which the heat exchange unit Ex is formed on the outer peripheral wall (for example, the peripheral wall portion 96 or the cylindrical peripheral wall portion 97) of the case 9. The mode in which the oil cooler OC or the like is supported on the outer side of the outer peripheral wall (for example, the peripheral wall portion 96 and the cylindrical peripheral wall portion 97) of the case 9 is not hindered.

As described above, in the present embodiment, the cooling unit 38 disposed so as to be in contact with at least one of the inverter module INV and the power supply module PWR in which a part of the cooling water path 39 is formed is provided. As described above, the oil cooler OC as the heat exchanger is attached to the partition wall 98. As illustrated in FIG. 8, the cooling unit 38 is disposed on the side (upper side Z1) opposite to the partition wall 98 side with respect to the oil cooler OC. In such a configuration, the second cooling water path 302, which is a section of the cooling water path 39 through which the cooling water flowing out of the oil cooler OC flows, corresponds to the specific cooling fluid path section described above. The second oil flow path 402, which is a section of the oil flow path 40 through which oil flows between the second accommodation chamber E2 and the oil cooler OC, corresponds to the specific oil path section described above.

Since the cooling fluid path forming member (cooling unit 38) is disposed on the side (upper side Z1) opposite to the partition wall 98 side with respect to the heat exchanger (oil cooler OC), and the specific cooling fluid path section (second cooling water path 302) through which the cooling fluid flowing out of the heat exchanger (oil cooler OC) flows is formed in the partition wall 98, the flow of the cooling fluid is easily made smooth. That is, since the flow path of the cooling fluid can be formed so as not to form a portion where the cooling fluid path turns back, the flow of the cooling fluid is easily smoothed, and the pressure loss is easily reduced. According to this configuration, since the specific oil path section (second oil flow path 402) through which the oil flowing into the heat exchanger (oil cooler OC) flows is formed in the partition wall 98, the flow of the oil from the second accommodation chamber E2 side to the heat exchanger (second oil flow path 402) is also easily made smooth.

The oil cooler OC includes the cooling water inlet 313 (cooling fluid inlet), which is the inlet of the cooling water, the cooling water outlet 314 (cooling fluid outlet), which is the outlet of the cooling water, the oil inlet 411, which is the inlet of the oil, and the oil outlet 412, which is the outlet of the oil. The first connection port 311 to which the cooling water inlet 313 is connected is provided on the cooling unit second surface 38b. The partition wall first surface 98a is provided with the attachment portion (second attachment portion 982) to which the oil cooler OC is attached, the second connection port 312 to which the cooling water outlet 314 is connected, the oil path first connection port 413 to which the oil inlet 411 is connected, and the oil path second connection port 414 to which the oil outlet 412 is connected.

By attaching the heat exchanger (oil cooler OC) to the attachment portion (second attachment portion 982) provided in the partition wall 98, connection between the cooling fluid outlet (cooling water outlet 314) and the second connection port 312, connection between the oil inlet 411 and the oil path first connection port 413, and connection between the oil outlet 412 and the oil path second connection port 414 can be easily performed. By assembling the heat exchanger (oil cooler OC) and the cooling fluid path forming member (cooling unit 38), the cooling fluid inlet (cooling water inlet 313) and the first connection port 311 can be easily connected.

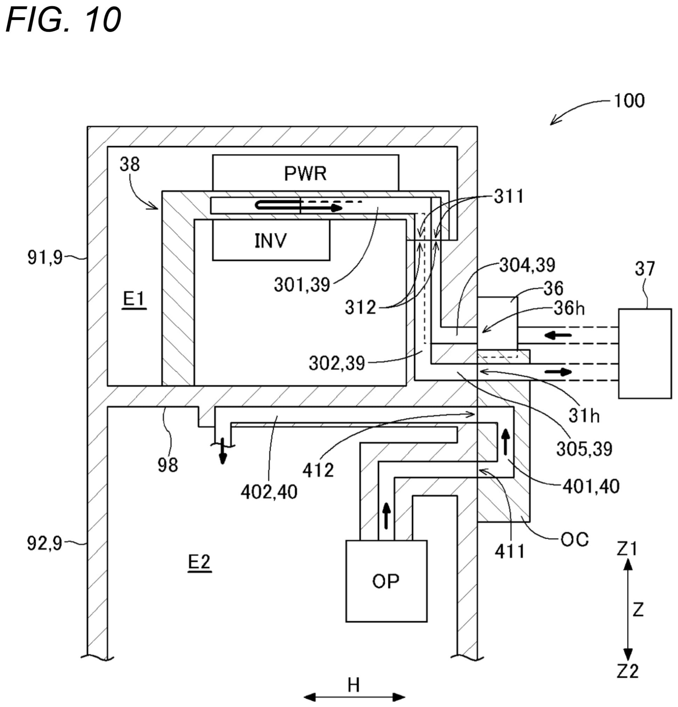

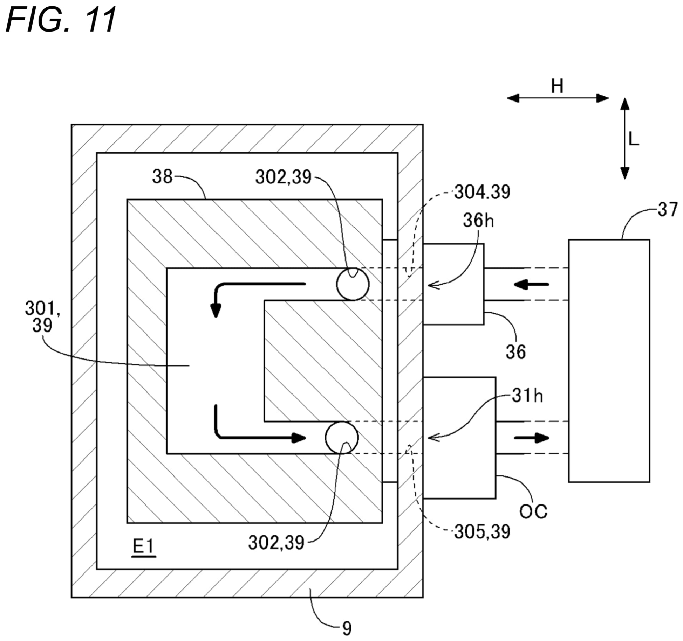

Another configuration example of the vehicle drive device 100 will be described with reference to FIGS. 10 and 11. In a case of distinguishing from the mode described above with reference to FIGS. 1 to 9, the mode described above with reference to FIGS. 1 to 9 will be referred to as a "first configuration example", and the mode described with reference to FIGS. 10 and 11 will be referred to as a "second configuration example". The description of the same configuration in the first configuration example and the second configuration example will be appropriately omitted, and the same elements will be described using the same reference signs. FIG. 10 is a schematic cross-sectional view of the first accommodation chamber E1 and the second accommodation chamber E2 with the partition wall 98 interposed therebetween as in FIG. 8. FIG. 11 is a schematic cross-sectional view of the first accommodation chamber E1 in top view. Note that, since a person skilled in the art can easily understand from FIG. 8, the seal member S, the fastening member F or the like are omitted in FIG. 10.

Although not illustrated in FIGS. 10 and 11, the vehicle drive device 100 includes the drive unit TA including the rotary electric machine MG and the power transmission mechanism GT as described above with reference to FIG. 2. That is, the vehicle drive device 100 includes the rotary electric machine MG, the output member drivingly connected to the wheel W, the power transmission mechanism GT, the inverter module INV, the power supply module PWR, and the case 9. The power transmission mechanism GT transmits the drive force between the rotary electric machine MG and the output member. The inverter module INV is a module that controls driving of the rotary electric machine MG. The power supply module PWR is a module including at least one of the voltage conversion circuit (converter 61) electrically connected to the on-vehicle battery BT to perform voltage conversion of the on-vehicle battery BT, the charging circuit (charging feeding circuit 62) for charging the on-vehicle battery BT by the external power supply 60, and the feeding circuit (charging feeding circuit 62) for feeding power from the on-vehicle battery BT to the outside. The case 9 includes the first accommodation chamber E1 that accommodates the inverter module INV and the power supply module PWR, and the second accommodation chamber E2 that accommodates the rotary electric machine MG and the power transmission mechanism GT. As illustrated in FIG. 10, in the first accommodation chamber E1, the cooling unit 38 as a cooling fluid path forming member is disposed so as to be in contact with at least one of the inverter module INV and the power supply module PWR. The first cooling fluid path (first cooling water path 301) through which the cooling fluid flows is formed inside the cooling unit 38. The second cooling fluid path (second cooling water path 302) through which the cooling fluid flows is formed inside the wall of the case 9. As illustrated in FIGS. 10 and 11, the first cooling water path 301 and the second cooling water path 302 are connected inside the first accommodation chamber E1. Note that, as illustrated in FIG. 10, the wall in which the second cooling water path 302 is formed is preferably thicker than the other walls. The wall of the case 9 including the thick portion is preferably formed integrally.

The second configuration example illustrates a mode in which the power supply module PWR is disposed on the upper side Z1 of the cooling unit 38 and the inverter module INV is disposed on the lower side Z2. In the first configuration example, the oil cooler OC is accommodated in the first accommodation chamber E1 as illustrated in FIG. 8, but in the second configuration example, the oil cooler OC is disposed outside the case 9 as an external member as illustrated in FIGS. 10 and 11. Similarly to the first configuration example, the first water pump 36 is disposed outside the case 9 also in the second configuration example. That is, as illustrated in FIG. 11, in the second configuration example, the first water pump 36 and the oil cooler OC are arranged in parallel outside the case 9. Specifically, the first water pump 36 and the oil cooler OC are arranged side by side in the axial direction L outside the case 9. As illustrated in FIG. 10, as seen in the axial direction L, the first water pump 36 and the oil cooler OC are arranged so as to partially overlap each other. Here, a mode in which the lower portion of the first water pump 36 overlaps the upper portion of the oil cooler OC is exemplified.

As illustrated in FIG. 10, the second cooling water path 302 is formed inside a wall forming the first accommodation chamber E1 in the case 9. The connection port (first connection port 311) provided in the first cooling water path 301 and the connection port (second connection port 312) provided in the second cooling water path 302 are connected in the first accommodation chamber E1. As described above, the first cooling water path 301 is formed inside the cooling unit 38. The first connection port 311 is a connection port connected to the cooling water path 39 formed in a member (here, the case 9) different from the cooling unit 38. The second cooling water path 302 is formed inside the wall of the case 9. The second connection port 312 is a connection port connected to the cooling water path 39 formed in a member (here, the cooling unit 38) different from the case 9. Therefore, it can be said that the first connection port 311, which is the connection port in the first cooling water path 301, the connection port connected to a member (here, the case 9) different from the cooling unit 38, and the second connection port 312, which is the connection port in the second cooling water path 302, the connection port connected to a member (here, the cooling unit 38) different from the case 9, are connected in the first accommodation chamber E1.

As illustrated in FIG. 10, the second cooling water path 302 includes the fourth cooling water path 304, which is an inflow path through which the cooling fluid flowing in from an inflow port (first water pump connection port 36h) provided on the wall of the case 9 flows to the first cooling water path 301, and a fifth cooling water path 305, which is an outflow path through which the cooling fluid flowing from the first cooling water path 301 flows out of the case 9 from an outflow port (external connection port 31h) provided on the wall of the case 9. The external member (oil cooler OC) connected to the outflow port (external connection port 31h) is disposed outside the case 9.

Similarly to the mode described above with reference to FIG. 8 or the like, in the mode illustrated in FIG. 10 also, the second accommodation chamber E2 is provided with the oil path (oil flow path 40) through which oil for lubricating and cooling the rotary electric machine MG and the power transmission mechanism GT flows. A part of the oil flow path 40 is formed inside the partition wall 98 that partitions the first accommodation chamber E1 and the second accommodation chamber E2 and the external member (oil cooler OC). The external member is the oil cooler OC functioning as the heat exchanger in which heat exchange between the cooling fluid and the oil is performed. The cooling water path 39 through which the cooling water flows is formed in the first accommodation chamber E1, and the oil flow path 40 through which the oil flows is formed in the second accommodation chamber E2. Since the oil cooler OC exchanges heat between the cooling water and the oil, this is preferably disposed in a place close to both the first accommodation chamber E1 and the second accommodation chamber E2. Since the oil flow path 40 is formed in the partition wall 98 that partitions the first accommodation chamber E1 and the second accommodation chamber E2, the oil cooler OC can be easily disposed at an appropriate position.

### [Other Embodiments]

Other embodiments will be described below. Note that, the configurations of the embodiments described below are not limited to those applied alone, and can be applied in combination with the configurations of other embodiments as long as there is no contradiction.

(1) In the above description, a mode in which the reducer 6 and the differential gear mechanism 5 are provided as the power transmission mechanism GT has been exemplified. However, the power transmission mechanism GT is not limited to such a configuration. The power transmission mechanism GT may include only the differential gear mechanism 5 without including the reducer 6, for example. The power transmission mechanism GT may include only the reducer 6 without including the differential gear mechanism 5, and may be configured to transmit power from one rotary electric machine MG to one wheel W.
   In the present embodiment, the planetary gear mechanism having a fixed gear ratio is exemplified as the reducer 6, but the reducer 6 may have a plurality of gear ratios.
(2) As illustrated in FIGS. 5 and 6, in a mode in which the DC link capacitor 16 is arranged side by side with the inverter circuit PM on the cooling unit first surface 38a, the DC link capacitor 16 may be included in the inverter module INV. However, for example, in a case where the DC link capacitor 16 is disposed on a rear surface side of the cooling unit first surface 38a, the DC link capacitor 16 is not necessarily included in the inverter module INV.

### [Summary of Embodiment]

Hereinafter, the vehicle drive device (100) described above will be simply summarized.

A vehicle drive device (100) includes, as one aspect, a rotary electric machine (MG), output members (53, 54, DS1, DS2) drivingly connected to a wheel (W), a power transmission mechanism (GT) that transmits a driving force between the rotary electric machine (MG) and the output members (53, 54, DS1, DS2), an inverter module (INV) that controls driving of the rotary electric machine (MG), a power supply module (PWR) including at least one of a voltage conversion circuit (61) electrically connected to an on-vehicle battery (BT), the voltage conversion circuit that performs voltage conversion of the on-vehicle battery (BT), a charging circuit (62) for charging the on-vehicle battery (BT) from an external power supply (60), and a feeding circuit (62) for feeding power from the on-vehicle battery (BT) to an outside, and a case (9) including a first accommodation chamber (E1) that accommodates the inverter module (INV) and the power supply module (PWR), and a second accommodation chamber (E2) that accommodates the rotary electric machine (MG) and the power transmission mechanism (GT), in which a cooling fluid path forming member (38) is disposed in the first accommodation chamber (E1) so as to be in contact with at least one of the inverter module (INV) and the power supply module (PWR), a first cooling fluid path (301) through which a cooling fluid flows is formed inside the cooling fluid path forming member (38), a second cooling fluid path (302) through which the cooling fluid flows is formed inside a wall of the case (9), and the first cooling fluid path (301) and the second cooling fluid path (302) are connected inside the first accommodation chamber (E1).

According to this configuration, the first cooling fluid path (301), which is a cooling fluid path inside the cooling fluid path forming member (38), and the second cooling fluid path (302), which is a cooling fluid path inside the wall of the case (9), are connected inside the first accommodation chamber (E1). Therefore, the route of the cooling fluid path can be easily formed short, and the pressure loss in the cooling fluid path can be easily reduced. It is easy to facilitate the connecting work of the first cooling fluid path (301) and the second cooling fluid path (302). That is, according to this configuration, it is possible to appropriately cool the cooling target by reducing an installation space and the pressure loss to appropriately form the flow path of the cooling fluid.

In the vehicle drive device (100), the case (9) preferably includes a partition wall (98) that partitions the first accommodation chamber (E1) and the second accommodation chamber (E2), the second cooling fluid path (302) is preferably formed inside the partition wall (98), a first connection port (311), which is a connection port with another member in the first cooling fluid path (301), is preferably provided on a surface (38b) facing the partition wall (98) of the cooling fluid path forming member (38), and a second connection port (312), which is a connection port with another member in the second cooling fluid path (302), is preferably provided on a surface (98a) facing the cooling fluid path forming member (38) of the partition wall (98).

According to this configuration, since the surface (38b) of the cooling fluid path forming member (38) facing the partition wall (98) and the surface (98a) of the partition wall (98) facing the cooling fluid path forming member (38) face each other, it is easy to facilitate the connecting work of the first cooling fluid path (301) and the second cooling fluid path (302) when assembling the cooling fluid path forming member (38) to the case 9.

Note that, another member to which the first connection port (311) is connected and another member to which the second connection port (311) is connected may be the same member or different members. In a case of the same member, the first connection port (311) and the second connection port (312) can be connected via this another member. In a case of the different members, for example, the first connection port (311) may be connected to first another member, the second connection port (312) may be connected to second another member different from the first another member, and when the first another member and the second another member are connected, the first connection port (311) and the second connection port (312) may be connectable via the first another member and the second another member. In this manner, another member can also be referred to as a member connecting the first connection port (311) and the second connection port (312). That is, another member can function as the following connection member.

In the vehicle drive device (100), a connection member (OC) is preferably disposed between the cooling fluid path forming member (38) and the partition wall (98), the connection member (OC) preferably includes a third connection port (313) connected to the first connection port (311) and a fourth connection port (314) connected to the second connection port (312), a first attachment portion (981) to which the cooling fluid path forming member (38) is attached and a second attachment portion (982) to which the connection member (OC) is attached are preferably provided on a surface (98a) facing the first accommodation chamber (E1) of the partition wall (98), the first connection port (311), the second connection port (312), the third connection port (313), and the fourth connection port (314) are preferably formed in such a manner that the first connection port (311) and the third connection port (313) are connected and the second connection port (312) and the fourth connection port (314) are connected in a state in which the connection member (OC) is attached to the second attachment portion (982) and the cooling fluid path forming member (38) is attached to the first attachment portion (981).

According to this configuration, the first cooling fluid path (301) and the second cooling fluid path (302) can be connected only by assembling the connection member (OC) and the cooling fluid path forming member (38) to the partition wall (98) of the case (9). Therefore, it is easy to facilitate the connecting work of the first cooling fluid path (301) and the second cooling fluid path (302).

In the vehicle drive device (100), the second accommodation chamber (E2) is preferably provided with an oil path (40) through which oil for lubricating and cooling the rotary electric machine (MG) and the power transmission mechanism (GT) flows, a part of the oil path (40) is preferably formed inside the partition wall (98) and the connection member (OC), and the connection member (OC) preferably functions as a heat exchanger (OC) in which heat exchange between the cooling fluid and the oil is performed.

According to this configuration, by using the heat exchanger (OC) that performs heat exchange between the cooling fluid and the oil as the connection member (OC) that connects the first cooling fluid path (301) and the second cooling fluid path (302), the vehicle drive device (100) can be easily downsized as compared with a case where the heat exchanger (OC) and the connection member (OC) are provided separately.

In the vehicle drive device (100), the second cooling fluid path (302) is preferably formed inside a wall forming the first accommodation chamber (E1) in the case (9), and a first connection port (311), which is a connection port connected to a member different from the cooling fluid path forming member (38) in the first cooling fluid path (301), and a second connection port (312), which is a connection port connected to a member different from the case (9) in the second cooling fluid path (302), are preferably connected in the first accommodation chamber (E1).

Since the second cooling fluid path (302) is formed inside the wall of the case (9) forming the first accommodation chamber (E1), the vehicle drive device (100) is easily downsized. The first cooling fluid path (301) and the second cooling fluid path (302) can be easily connected only by assembling the cooling fluid path forming member (38) to the case (9).

In the vehicle drive device (100), the second cooling fluid path (302) preferably includes an inflow path (304) through which the cooling fluid flowing in from inflow ports (36h, 311) provided on a wall of the case (9) flows to the first cooling fluid path (301), and an outflow path (305) through which the cooling fluid flowing from the first cooling fluid path (301) flows out of the case (9) from outflow ports (31h, 312) provided on the wall of the case (9), and an external member (OC) connected to the outflow ports (31h, 312) is preferably disposed outside the case (9).

According to this configuration, the first cooling fluid path (301) can be easily connected to the external member (OC) via the second cooling fluid path (302) by assembling the external member (OC) and the cooling fluid path forming member (38) to the case (9).

In the vehicle drive device (100), the case (9) preferably includes the partition wall (98) that partitions the first accommodation chamber (E1) and the second accommodation chamber (E2), the second accommodation chamber (E2) is preferably provided with an oil path (40) through which oil for lubricating and cooling the rotary electric machine (MG) and the power transmission mechanism (GT) flows, a part of the oil path (40) is preferably formed inside the partition wall (98) and the external member (OC), and the external member (OC) preferably functions as a heat exchanger (OC) in which heat exchange between the cooling fluid and the oil is performed.

The heat exchanger (OC) is required for both cooling fluid and oil for heat exchange. The cooling fluid flows inside the first accommodation chamber (E1), and the oil flows inside the second accommodation chamber (E2). The partition wall (98) partitions the first accommodation chamber (E1) and the second accommodation chamber (E2), and since a part of the oil path (40) is formed inside the partition wall (98), the heat exchanger (OC) can be easily disposed at a position where both the cooling fluid and the oil can be easily guided.

In the cooling fluid path forming member (38) of the vehicle drive device (100), the first cooling fluid path (301) through which the cooling fluid flows independently from the case (9) is preferably formed inside the cooling fluid path forming member (38).

Since the cooling fluid path forming member (38) is not a plate such as a so-called heat sink but a member in which the cooling water path independent from the case 9 is formed inside, it is possible to appropriately cool the cooling target (for example, the inverter module (INV) and the power supply module (PWR)).

In the vehicle drive device (100), the inverter module (INV) and the power supply module (PWR) are preferably disposed on a first surface (38a) that is a surface on one side of the cooling fluid path forming member (38), or the inverter module (INV) and the power supply module (PWR) are preferably disposed on a second surface (38b) that is a surface on the other side of the cooling fluid path forming member (38), and the first surface (38a).

Since the inverter module (INV) and the power supply module (PWR) are disposed in the first accommodation chamber (E1), which is the same accommodation space, together with the cooling fluid path forming member (38), the inverter module (INV) and the power supply module (PWR), which are heat generating members, can be appropriately cooled at one site by a simple cooling structure. For example, in a case where the inverter module (INV) and the power supply module (PWR) are cooled by an oil path or the like formed on a surface (a surface of an inner wall) of the case (9), it is conceivable that the oil path cannot be routed on the surface of the case 9, and there is a possibility that cooling performance is deteriorated or a scale of an entire device is increased in order to secure the cooling performance. However, by accommodating the inverter module (INV) and the power supply module (PWR) in the same first accommodation chamber (E1), and similarly disposing the inverter module (INV) and the power supply module (PWR) so as to be in contact with one or both of the first surface (38a) and the second surface (38b) of the cooling fluid path forming member (38) disposed in the first accommodation chamber (E1), a smaller vehicle drive device 100 can be formed.

### REFERENCE SIGNS LIST

9: Case, 10: Vehicle, 36h: First water pump connection port (inflow port), 38: Cooling unit (cooling fluid path forming member), 38a: Cooling unit first surface (first surface that is surface on one side of cooling fluid path forming member), 38b: Cooling unit second surface (second surface that is surface on other side of cooling fluid path forming member), 39: Cooling water path (cooling fluid path), 40: Oil flow path (oil path through which oil for lubricating and cooling flows), 52: Side gear (output member), 53: First side gear (output member), 54: Second side gear (output member), 60: External power supply, 61: Converter (voltage conversion circuit), 62: Charging feeding circuit (charging circuit, feeding circuit), 98: Partition wall, 98a: Partition wall first surface (surface facing cooling fluid path forming member (cooling unit) of partition wall), 100: Vehicle drive device, 300: Vehicle control device, 301: First cooling water path (first cooling fluid path), 302: Second cooling water path (second cooling fluid path), 304: Fourth cooling water path (inflow water path), 305: Fifth cooling water path (outflow water path), 311: First connection port, 312: Second connection port, 313: Cooling water inlet (third connection port), 314: Cooling water outlet (fourth connection port), 401: First oil flow path (part of oil path (oil flow path) formed inside partition wall and connection member), 402: Second oil flow path (part of oil path (oil flow path) formed inside partition wall and connection member), 981: First attachment portion, 982: Second attachment portion, BT: On-vehicle battery, DS1: First drive shaft (output member), DS2: Second drive shaft (output member), E1: First accommodation chamber, E2: Second accommodation chamber, GT: Power transmission mechanism, INV: Inverter module, MG: Rotary electric machine, OC: Oil cooler (heat exchanger, connection member, another member, external member)), PWR: Power supply module, and W: Wheel

## Claims

1. A vehicle drive device comprising:
a rotary electric machine;
an output member drivingly connected to a wheel;
a power transmission mechanism that transmits a driving force between the rotary electric machine and the output member;
an inverter module that controls driving of the rotary electric machine;
a power supply module including at least one of a voltage conversion circuit electrically connected to an on-vehicle battery, the voltage conversion circuit that performs voltage conversion of the on-vehicle battery, a charging circuit for charging the on-vehicle battery from an external power supply, and a feeding circuit for feeding power from the on-vehicle battery to an outside; and
a case including a first accommodation chamber that accommodates the inverter module and the power supply module, and a second accommodation chamber that accommodates the rotary electric machine and the power transmission mechanism, wherein
a cooling fluid path forming member is disposed in the first accommodation chamber so as to be in contact with at least one of the inverter module and the power supply module,
a first cooling fluid path through which a cooling fluid flows is formed inside the cooling fluid path forming member,
a second cooling fluid path through which the cooling fluid flows is formed inside a wall of the case, and
the first cooling fluid path and the second cooling fluid path are connected inside the first accommodation chamber.

2. The vehicle drive device according to claim 1, wherein
the case includes a partition wall that partitions the first accommodation chamber and the second accommodation chamber,
the second cooling fluid path is formed inside the partition wall,
a first connection port, which is a connection port with another member in the first cooling fluid path, is provided on a surface facing the partition wall of the cooling fluid path forming member, and
a second connection port, which is a connection port with another member in the second cooling fluid path, is provided on a surface facing the cooling fluid path forming member of the partition wall.

3. The vehicle drive device according to claim 2, wherein
a connection member is disposed between the cooling fluid path forming member and the partition wall,
the connection member includes a third connection port connected to the first connection port and a fourth connection port connected to the second connection port,
a first attachment portion to which the cooling fluid path forming member is attached and a second attachment portion to which the connection member is attached are provided on a surface facing the first accommodation chamber of the partition wall,
the first connection port, the second connection port, the third connection port, and the fourth connection port are formed in such a manner that the first connection port and the third connection port are connected and the second connection port and the fourth connection port are connected in a state in which the connection member is attached to the second attachment portion and the cooling fluid path forming member is attached to the first attachment portion.

4. The vehicle drive device according to claim 3, wherein
the second accommodation chamber is provided with an oil path through which oil for lubricating and cooling the rotary electric machine and the power transmission mechanism flows,
a part of the oil path is formed inside the partition wall and the connection member, and
the connection member functions as a heat exchanger in which heat exchange between the cooling fluid and the oil is performed.

5. The vehicle drive device according to claim 1, wherein
the second cooling fluid path is formed inside a wall forming the first accommodation chamber in the case, and
a first connection port, which is a connection port connected to a member different from the cooling fluid path forming member in the first cooling fluid path, and a second connection port, which is a connection port connected to a member different from a wall of the case in the second cooling fluid path, are connected in the first accommodation chamber.

6. The vehicle drive device according to claim 5, wherein
the second cooling fluid path includes an inflow path through which the cooling fluid flowing in from an inflow port provided on a wall of the case flows to the first cooling fluid path, and an outflow path through which the cooling fluid flowing from the first cooling fluid path flows out of the case from an outflow port provided on the wall of the case, and
an external member connected to the outflow port is disposed outside the case.

7. The vehicle drive device according to claim 6, wherein
the case includes a partition wall that partitions the first accommodation chamber and the second accommodation chamber,
the second accommodation chamber is provided with an oil path through which oil for lubricating and cooling the rotary electric machine and the power transmission mechanism flows,
a part of the oil path is formed inside the partition wall and the external member, and
the external member functions as a heat exchanger in which heat exchange between the cooling fluid and the oil is performed.

8. The vehicle drive device according to claim 1, wherein
in the cooling fluid path forming member, the first cooling fluid path through which the cooling fluid flows independently from the case is formed inside the cooling fluid path forming member.

9. The vehicle drive device according to claim 1, wherein
the inverter module and the power supply module are disposed on a first surface that is a surface on one side of the cooling fluid path forming member, or
the inverter module and the power supply module are disposed on a second surface that is a surface on the other side of the cooling fluid path forming member, and the first surface.
